# EUROPEAN PATENT SPECIFICATION

(11) **EP 3 668 217 B1**
(45) Date of publication and mention of the grant of the patent: **10.05.2023**
(21) Application number: 18843866.7
(22) Date of filing: 07.08.2018
(51) Int. Cl.: H04L 41/0896, H04L 41/0853, H04L 43/0876

(54) **BANDWIDTH PART CONFIGURATION METHOD, NETWORK EQUIPMENT AND TERMINAL**
KONFIGURATIONSVERFAHREN FÜR BANDBREITENTEIL, NETZWERKVORRICHTUNG UND ENDGERÄT
PROCÉDÉ DE CONFIGURATION DE PARTIE DE BANDE PASSANTE, ÉQUIPEMENT DE RÉSEAU ET TERMINAL

(30) Priority: 11.08.2017 CN 201710687867
(43) Date of publication of application: 17.06.2020
(73) Proprietor: Vivo Mobile Communication Co., Ltd., Dongguan, Guangdong 523860 (CN)
(72) Inventor: MA, Yue, Dongguan Guangdong 523860 (CN); WU, Yumin, Dongguan Guangdong 523860 (CN); CHEN, Li, Dongguan Guangdong 523860 (CN); YANG, Xiaodong, Dongguan Guangdong 523860 (CN)
(74) Representative: Winter, Brandl - Partnerschaft mbB
(86) International application number: PCT/CN2018/099120
(87) International publication number: WO 2019/029510

(56) References cited:
- EP-A1- 3 142 283
- WO-A1-2013/169061
- CN-A- 105 099 634
- US-A1- 2017 126 300
- SAMSUNG: "RAN2 impacts from bandwidth part in NR", 3GPP DRAFT; R2-1704503 RAN2 IMPACTS FROM BANDWIDTH PART IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 4 May 2017 (2017-05-04), XP051263606, Retrieved from the Internet: URL:http://www.3gpp.org/ftp/tsg_ran/WG2_RL 2/TSGR2_98/Docs/ [retrieved on 2017-05-04]
- SAMSUNG: "RAN2 impacts from bandwidth part in NR", 3GPP TSG-RAN WG2 NR #98 Meeting R2-1704503, 4 May 2017 (2017-05-04), XP051263606,
- HUAWEI: "On bandwidth part and bandwidth adaptation", 3GPP TSG RAN WG1 Meeting #89 Rl-1706900, 6 May 2017 (2017-05-06), XP051261558,

## Description

### TECHNICAL FIELD

The present disclosure relates to the field of communication technology, in particular to a Bandwidth Part (BWP) configuration method, a network device and a User Equipment (UE).

### BACKGROUND

As compared with a conventional mobile communication system, a 5^{th}-Generation (5G) mobile communication system, also called as a New Radio (NR) system, needs to adapt to various scenarios and service requirements. In order to meet the requirements on different services and scenarios, in the 5G system, a cell covered by a network device may support a relatively large bandwidth (e.g., 100MHz), but a UE may merely support a relatively small operating bandwidth (e.g., SMHz). The operating bandwidth for the UE may be considered as a BWP of the larger bandwidth.

In terms of a physical layer, the BWP refers to the division of a carrier with a large bandwidth into several parts, and each part has a relatively small bandwidth. For the UE in a connected state, one or more BWPs may be allocated or activated for the UE for the transmission of data and control. Because this is an operation made on the carrier with a large bandwidth, it is different from that in conventional carrier aggregation. However, there is currently no air-interface configuration scheme in this scenario in the related art.

SAMSUNG: "RAN2 impacts from bandwidth part in NR", 3GPP DRAFT; R2-1704503 relates to design considerations to support wider BW in NR, especially about flexible BW support based on bandwidth part.

### SUMMARY

In one aspect, the present disclosure provides in some embodiments a BWP configuration method applied for a network device, including: receiving UE capability information carrying BWP capability information reported by a UE; and configuring an air interface parameter set of at least one BWP for the UE in accordance with the UE capability information, the air interface parameter set including at least one air interface parameter of the BWP, wherein the configuring the air interface parameter set of the at least one BWP for the UE in accordance with the UE capability information includes: configuring at least one BWP and the air interface parameter set of the at least one BWP for the UE in accordance with the UE capability information; and transmitting the air interface parameter set of the at least one BWP to the UE through a broadcast message or preset signaling; wherein the transmitting the air interface parameter set of the at least one BWP to the UE through the broadcast message or preset signaling includes: transmitting information about a correspondence between uplink and downlink BWPs in the air interface parameter set of the at least one BWP to the UE through the broadcast message or the preset signaling, wherein the uplink and downlink BWPs include a BWP pair consisting of an uplink BWP and a downlink BWP, and the information about the correspondence between the uplink and downlink BWPs includes at least one of information about a feedback relationship between the uplink and downlink BWPs, scheduling information about the uplink and downlink BWPs, information about Timing Advance (TA) of the uplink and downlink BWPs, or path loss information about the uplink and downlink BWPs.

In another aspect, the present disclosure provides in some embodiments a network device, including: a first reception module configured to receive UE capability information carrying BWP capability information reported by a UE; and a configuration module configured to configure an air interface parameter set of at least one BWP for the UE in accordance with the UE capability information, the air interface parameter set including at least one air interface parameter of the BWP, wherein the configuration module includes: a configuration sub-module configured to configure at least one BWP and the air interface parameter set of the at least one BWP for the UE in accordance with the UE capability information; and a first transmission sub-module configured to transmit the air interface parameter set of the at least one BWP to the UE through a broadcast message or preset signaling; wherein the first transmission sub-module includes a first transmission unit configured to transmit information about a correspondence between uplink and downlink BWPs in the air interface parameter set of the at least one BWP to the UE through the broadcast message or the preset signaling, wherein the uplink and downlink BWPs include a BWP pair consisting of an uplink BWP and a downlink BWP, and the information about the correspondence between the uplink and downlink BWPs includes at least one of information about a feedback relationship between the uplink and downlink BWPs, scheduling information about the uplink and downlink BWPs, information about TA of the uplink and downlink BWPs, or path loss information about the uplink and downlink BWPs.

In still yet another aspect, the present disclosure provides in some embodiments a BWP configuration method for a UE, including: reporting UE capability information carrying BWP capability information to a network device; and receiving an air interface parameter set of at least one BWP configured by the network device in accordance with the UE capability information, the air interface parameter set including at least one air interface parameter of the BWP, wherein the receiving the air interface parameter set of the at least one BWP configured by the network device in accordance with the UE capability information includes: receiving at least one BWP and the air interface parameter set of the at least one BWP configured by the network device in accordance with the UE capability information through a broadcast message or preset signaling; wherein the receiving the at least one BWP and the air interface parameter set of the at least one BWP configured by the network device in accordance with the UE capability information includes: receiving information about a correspondence between uplink and downlink BWPs in the air interface parameter set of the at least one BWP configured by the network device in accordance with the UE capability information, wherein the uplink and downlink BWPs include a BWP pair consisting of an uplink BWP and a downlink BWP, and the information about the correspondence between the uplink and downlink BWPs includes at least one of information about a feedback relationship between the uplink and downlink BWPs, scheduling information about the uplink and downlink BWPs, information about TA of the uplink and downlink BWPs, or path loss information about the uplink and downlink BWPs.

In still yet another aspect, the present disclosure provides in some embodiments a UE, including: a reporting module configured to report UE capability information carrying BWP capability information to a network device; and a fourth reception module configured to receive an air interface parameter set of at least one BWP configured by the network device in accordance with the UE capability information, the air interface parameter set including at least one air interface parameter of the BWP, wherein the fourth reception module includes a second reception sub-module configured to receive at least one BWP and the air interface parameter set of the at least one BWP configured by the network device in accordance with the UE capability information through a broadcast message or preset signaling; wherein the second reception sub-module includes a first reception unit configured to receive information about a correspondence between uplink and downlink BWPs in the air interface parameter set of the at least one BWP configured by the network device in accordance with the UE capability information, wherein the uplink and downlink BWPs include a BWP pair consisting of an uplink BWP and a downlink BWP, and the information about the correspondence between the uplink and downlink BWPs includes at least one of information about a feedback relationship between the uplink and downlink BWPs, scheduling information about the uplink and downlink BWPs, information about TA of the uplink and downlink BWPs, or path loss information about the uplink and downlink BWPs.

### BRIEF DESCRIPTION OF THE DRAWINGS

In order to illustrate the technical solutions of the present disclosure or the related art in a clearer manner, the drawings desired for the present disclosure or the related art will be described hereinafter briefly. Obviously, the following drawings merely relate to some embodiments of the present disclosure, and based on these drawings, a person skilled in the art may obtain the other drawings without any creative effort.
Fig.1 is a flow chart of a BWP configuration method for a network device according to one embodiment of the present disclosure;
Fig.2 is a schematic view showing basic procedures of the BWP configuration method according to one embodiment of the present disclosure;
Fig.3 is a schematic view showing procedures of requesting other system information according to one embodiment of the present disclosure;
Fig.4 is a schematic view showing the network device according to one embodiment of the present disclosure;
Fig.5 is a block diagram of the network device according to one embodiment of the present disclosure;
Fig.6 is a flow chart of a BWP configuration method for a UE according to one embodiment of the present disclosure;
Fig.7 is a schematic view showing the UE according to one embodiment of the present disclosure; and
Fig.8 is a block diagram of the UE according to one embodiment of the present disclosure.

### DETAILED DESCRIPTION

The present disclosure will be described hereinafter in conjunction with the drawings and embodiments. The following embodiments are for illustrative purposes only, but shall not be used to limit the scope of the present disclosure. Actually, the embodiments are provided so as to facilitate the understanding of the scope of the present disclosure.

Such words as "first" and "second" involved in the description and the appended claims are merely used to differentiate different objects rather than to represent any specific order. It should be appreciated that, the data used in this way may be replaced with each other, so as to implement the embodiments in an order other than that shown in the drawings or described in the description. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device.

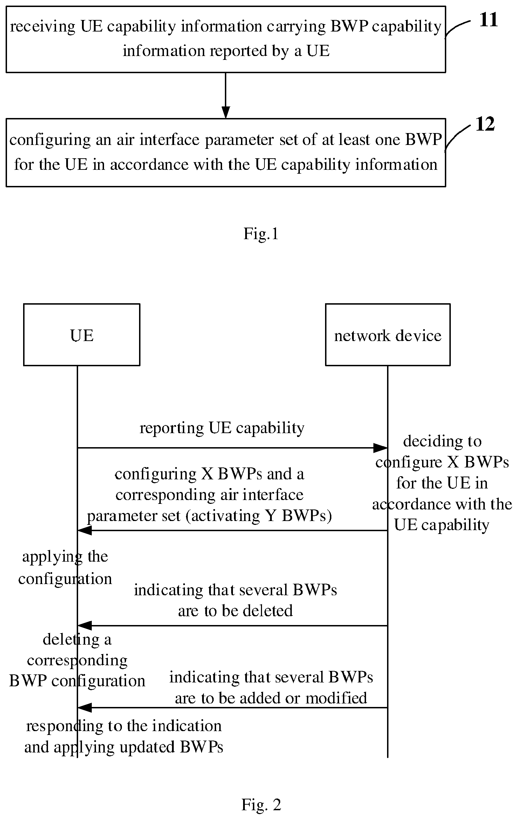

The present disclosure provides in some embodiments a BWP configuration method applied for a network device which, as shown in Fig.1, includes Steps 11 and 12.

Step 11: receiving UE capability information carrying BWP capability information reported by a UE.

The UE capability information may be used to indicate a UE air interface capability, especially the UE air interface capability based on BWPs.

Step 12: configuring an air interface parameter set of at least one BWP for the UE in accordance with the UE capability information. The air interface parameter set may include at least one air interface parameter of the BWP.

To be specific, as shown in Fig.2, the UE may notify the network device of its own BWP-related capability through reporting UE capability, e.g., the capability of at most supporting X BWPs. At this time, the network device may decide to configure X BWPs for the UE in accordance with the UE capability, and further configure the X BWPs and a corresponding air interface parameter set for the UE. The network device may simultaneously indicate that Y of the X BWPs are to be activated, where Y is smaller than or equal to X. Upon the receipt of the corresponding air interface parameter set, the UE may use the above-mentioned configuration.

Subsequent to Step 12, the BWP configuration method may further include: when it is necessary to add or modify the BWPs for the UE, transmitting information about the to-be-added or to-be-modified BWPs to the UE; and when it is necessary to delete the BWPs for the UE, transmitting information about a list of the to-be-deleted BWPs to the UE. In other words, after the network device has configured the corresponding BWPs for the UE, the network device may further add the BWPs or modify or delete some BWPS in accordance with a real-time network communication state, a UE service requirement or a resource scheduling situation. As shown in Fig.2, when the network device indicates the deletion of several BWPs, the UE may delete corresponding BWP configurations. When the network device indicates the addition or modification of several BWPs, the UE may respond to this indication and use the updated BWPs.

The information about the BWPs may include at least one of index information about each to-be-added or to-be-modified BWP, central frequency point information about each to-be-added or to-be-modified BWP, bandwidth information about each to-be-added or to-be-modified BWP, antenna configuration information about each to-be-added or to-be-modified BWP, numerology information about each to-be-added or to-be-modified BWP, uplink/downlink BWP configuration information corresponding to each to-be-added or to-be-modified BWP when there is a correspondence between the uplink and downlink BWPs, configuration information about a Random Access Channel (RACH) for the UE with respect to each to-be-added or to-be-modified BWP, information about a power control parameter of the UE with respect to each to-be-added or to-be-modified BWP, cross-BWP scheduling configuration information, and configuration information about a physical channel for the UE with respect to each to-be-added or to-be-modified BWP.

To be specific, the configuration information about the physical channel may include at least one of configuration-related information about a Physical Downlink Control Channel (PDCCH), configuration-related information about a Physical Downlink Shared Channel (PDSCH), configuration-related information about a Physical Uplink Shared Channel (PUSCH), configuration-related information about a Physical Uplink Control Channel (PUCCH), configuration-related information about a Sounding Reference Signal (SRS), configuration-related information about a Physical Random Access Channel (PRACH), configuration-related information about a Physical Broadcast Channel (PBCH), configuration-related information about a Scheduling Request (SR), configuration-related information about a reference signal such as Channel State Information Reference Signal (CSI-RS)/Tracking Reference Signal (TRS)/Phase Tracking Reference Signal (PTRS)/Demodulation Reference Signal (DMRS), and configuration-related information about a channel state report.

The UE capability information may include at least one of: capability information about the maximum quantity of BWPs capable of being configured for the UE simultaneously for uplink or downlink transmission and a bandwidth; capability information about the maximum quantity of BWPs capable of being activated by the UE simultaneously for the uplink or downlink transmission and a bandwidth; capability information about the quantity of consecutive or inconsecutive BWPs in a same carrier capable of being configured for the UE simultaneously and a bandwidth; capability information about the quantity of consecutive or inconsecutive BWPs in a same carrier capable of being activated by the UE simultaneously and a bandwidth; capability information about the quantity of BWPs capable of being configured for the UE simultaneously in different carriers and a bandwidth in the case of Carrier Aggregation (CA); capability information about the quantity of BWPs capable of being configured for the UE simultaneously in different carriers and a bandwidth in the case of Dual Connectivity (DC); capability information about the quantity of BWPs capable of being activated by the UE simultaneously in different carriers and a bandwidth in the case of CA; capability information about the quantity of BWPs capable of being activated by the UE simultaneously in different carriers and a bandwidth in the case of DC; Multiple-Input Multiple-Output (MIMO) capability information about each BWP to be supported by the UE; numerology information about each BWP to be supported by the UE, including a subcarrier spacing and a Cyclic Prefix (CP); first indication information indicating whether the UE has a cross-BWP scheduling capability; second indication information indicating whether the UE has a fast switching capability, i.e., indicating whether the UE has a transceiving capability of rapidly retuning from one BWP to another BWP provided that a certain performance requirement has been met; information about a retuning time length when the UE has the fast switching capability; BWP measurement gap capability information about the UE, i.e., information indicating whether a measurement gap needs to be provided for the measurement of another BWP when the UE operates at a certain BWP; third indication information indicating whether the UE has a capability of measuring, at a current BWP, different measurement items of the current BWP, i.e., indicating whether the UE has a capability of measuring, at a certain BWP, different measurement items of the BWP; fourth indication information indicating whether the UE has a capability of measuring, at one BWP, different measurement items of the other BWP; fifth indication information indicating whether a measurement gap needs to be configured for the UE when the UE has the capability of measuring, at one BWP, different measurement items of the other BWP, i.e., indicating whether the measurement gap needs to be configured for the UE during the measurement of a certain measurement item; sixth indication information indicating whether a measurement gap needs to be configured for the UE when the UE needs to transmit an SRS; and seventh indication information indicating whether a measurement gap needs to be configured for the UE when the UE performs intra-frequency multiple-beam (cross-transceiving multiple-beam) measurement on one BWP.

It should be appreciated that, the UE capability information may be reported to the network device through joint bandwidth.

The measurement items in the third indication information, the fourth indication information and the fifth indication information may include at least one of Reference Signal Received Power (RSRP), Reference Signal Received Quality (RSRQ), a Signal to Interference plus Noise Ratio (SINR), Received Signal Strength Indication (RSSI) and Channel Quality Indication (CQI).

Further, when a certain UE supports the carrier aggregation of Band X and Band Y, and there is one carrier CCₓ₁ at Band X and two inconsecutive carriers CC_{y1} and CC_{y2} at Band Y, the UE capability in an LTE system may be X-A+Y-C, where A represents one carrier, and C represents that the UE has a capability of performing carrier aggregation on two inconsecutive carriers at a certain band. In a BWP scenario, one carrier may be provided with a plurality of BWPs, and at this time, it is necessary to define different BWP combination types. To be specific, there may also exist a plurality of BWP combinations in a supported large-bandwidth carrier. The air interface parameter set may include an air interface parameter type of each BWP. The air interface parameter type may include at least one of: a first air interface parameter indicating that merely one BWP is capable of being configured or activated in a current carrier, i.e., merely one BWP is capable of being configured or activated in each carrier; a second air interface parameter indicating that at least two BWPs at consecutive positions are capable of being configured or activated in the current carrier, i.e., two or more BWPs at consecutive positions are capable of being configured or activated in each carrier; a third air interface parameter indicating that at least two BWPs at inconsecutive positions are capable of being configured or activated in the current carrier, i.e., two or more BWPs at inconsecutive positions are capable of being configured or activated in each carrier; a fourth air interface parameter indicating that at least three BWPs at consecutive positions and inconsecutive positions are capable of being configured or activated in the current carrier, i.e., a plurality of BWPs at consecutive positions and inconsecutive positions are capable of being configured or activated in each carrier; and a fifth air interface parameter indicating that at least one BWP at a predetermined position is capable of being configured or activated in the other carrier, i.e., one or more BWPs are capable of being configured or activated at a designated position in the other carrier. The other carrier may be a carrier other than the current carrier.

To be specific, Step 12 includes:
configuring, by the network device, at least one BWP and the air interface parameter set of the at least one BWP for the UE in accordance with the UE capability information; and transmitting the air interface parameter set of the at least one BWP to the UE through a broadcast message or preset signaling. In other words, the network device transmits the air interface parameter set of the at least one BWP to the UE through the broadcast message or the preset signaling.

The transmitting the air interface parameter set of the at least one BWP to the UE through the broadcast message or the preset signaling includes transmitting information about the correspondence between the uplink and downlink BWPs in the air interface parameter set of the at least one BWP to the UE through the broadcast message or the preset signaling. Here, the correspondence between the uplink and downlink BWPs is determined through the broadcast message or dedicated signaling. The uplink and downlink BWPs may be a BWP pair consisting of an uplink BWP and a downlink BWP. The information about the correspondence between the uplink and downlink BWPs includes at least one of information about a feedback relationship between the uplink and downlink BWPs, scheduling information about the uplink and downlink BWPs, information about Timing Advance (TA) of the uplink and downlink BWPs, and path loss information about the uplink and downlink BWPs. The information about the feedback relationship between the uplink and downlink BWPs may include the feedback relationship such as Hybrid Automatic Repeat reQuest (HARQ) feedback and a channel state.

Further, the transmitting the information about the correspondence between the uplink and downlink BWPs in the air interface parameter set of the at least one BWP to the UE may be implemented in the following modes.

Mode 1: the information about the correspondence between the uplink and downlink BWPs in the air interface parameter set of the at least one BWP may be transmitted to the UE through carrying a configuration of one of the uplink and downlink BWPs in a configuration of the other one of the uplink and downlink BWPs. In other words, the configuration of a certain downlink (or uplink) BWP may explicitly include the configuration of the associated uplink (or downlink) BWP.

Mode 2: the information about the correspondence between the uplink and downlink BWPs in the air interface parameter set of the at least one BWP may be transmitted to the UE through providing the uplink and downlink BWPs with a same configuration. In other words, a certain BWP pair may use the same configuration in accordance with a preset rule.

Mode 3: the information about the correspondence between the uplink and downlink BWPs in the air interface parameter set of the at least one BWP may be transmitted to the UE through configuring a predetermined variable. In other words, a configuration of the variable delta may be used.

Subsequent to transmitting the information about the correspondence between the uplink and downlink BWPs in the air interface parameter set of the at least one BWP to the UE through the broadcast message or the preset signaling, the BWP configuration method may further include: when the information about the correspondence between the uplink and downlink BWPs indicates that one downlink BWP corresponds to a plurality of uplink feedback BWPs, modifying an uplink feedback BWP adopted by the UE for the uplink transmission through the preset signaling. In other words, when an uplink control channel for a plurality of BWPs has been configured, the used BWP feedback may be modified through signaling.

In addition, subsequent to Step 12, the BWP configuration method may further include: receiving request information for requesting On-demand System Information (or other System Information, OSI) from the UE; and transmitting the OSI requested by the request information to the UE in accordance with the UE capability information through the at least one BWP configured for the UE.

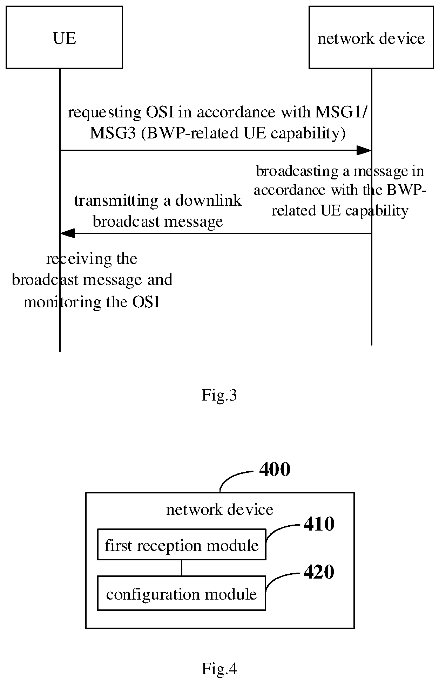

The request information may carry the UE capability information about the UE. To be specific, a procedure of requesting the OSI may include receiving the request information for requesting the OSI from the UE through a message 1 (MSG1) or a message 3 (MSG3). In other words, as shown in Fig.3, during the requesting of the OSI, when a default BWP has been indicated for the requesting of the SI and the transmission of a corresponding broadcast message, it is unnecessary for the network device to acquire the UE capability. When no default BWP has been indicated for the requesting of the SI and the transmission of a corresponding broadcast message and the network device does not acquire the UE capability, it is necessary to carry the BWP-related UE capability or the BWP for receiving the broadcast message in the request information for requesting the OSI included in the MSG1 or MSG3, so that the network device may determine the BWP for the transmission of the downlink broadcast message in accordance with the BWP-related UE capability. The UE may receive the corresponding broadcast message, and monitor the OSI.

In addition, subsequent Step 12, the BWP configuration method may further include: transmitting L1/L2/L3 measurement configuration information at a designated BWP of the at least one BWP to the UE in accordance with the air interface parameter set of the at least one BWP; receiving measurement report information reported by the UE after the measurement in accordance with the measurement configuration information; and updating the air interface parameter set for the UE in accordance with the measurement report information. L1 represents a physical layer, L2 represents a high layer, and L3 represents a Radio Resource Control (RRC) layer.

The updating the air interface parameter set for the UE in accordance with the measurement report information may include: when the measurement report information indicates that it is necessary to perform BWP switching, configuring indication information indicating whether or not to configure a measurement gap in the air interface parameter set. In other words, when a certain BWP has been configured and activated by the UE, for measurement, the network device wants the UE to provide the measurement item of the other BWP in a same carrier, so that the network device may determine how to switch to the other BWP. The BWP switching is a procedure performed at the physical layer, so an additional L1 measurement item needs to be provided, and a new measurement gap corresponding to the L1 measurement item needs to be configured. The measurement gap may be used to measure such L1 measurement items as SINR/CQI.

According to the BWP configuration method in the embodiments of the present disclosure, upon the receipt of the UE capability information reported by the UE, the network device flexibly configures at least one BWP for the UE and the air interface parameter set of the at least one BWP in accordance with the UE capability information. As a result, it is able to configure the air interface parameters in accordance with the BWPs which cannot be solved in the related art.

The BWP configuration method in different scenarios has been described hereinabove, and the corresponding network device will be described hereinafter in conjunction with the drawings.

As shown in Fig.4, the present disclosure further provides in some embodiments a network device 400 capable of implementing the above-mentioned BWP configuration method, i.e., receiving UE capability information carrying BWP capability information reported by a UE, and configuring an air interface parameter set of at least one BWP for the UE in accordance with the UE capability information, with a same technical effect. The network device 400 includes: a first reception module 410 configured to receive the UE capability information carrying the BWP capability information reported by the UE; and a configuration module 420 configured to configure the air interface parameter set of the at least one BWP for the UE in accordance with the UE capability information. The air interface parameter set may include at least one air interface parameter of the BWP.

The UE capability information may include at least one of: capability information about the maximum quantity of BWPs capable of being configured for the UE simultaneously for uplink or downlink transmission and a bandwidth; capability information about the maximum quantity of BWPs capable of being activated by the UE simultaneously for the uplink or downlink transmission and a bandwidth; capability information about the quantity of consecutive or inconsecutive BWPs in a same carrier capable of being configured for the UE simultaneously and a bandwidth; capability information about the quantity of consecutive or inconsecutive BWPs in a same carrier capable of being activated by the UE simultaneously and a bandwidth; capability information about the quantity of BWPs capable of being configured for the UE simultaneously in different carriers and a bandwidth in the case of Carrier Aggregation (CA); capability information about the quantity of BWPs capable of being configured for the UE simultaneously in different carriers and a bandwidth in the case of Dual Connectivity (DC); capability information about the quantity of BWPs capable of being activated by the UE simultaneously in different carriers and a bandwidth in the case of CA; capability information about the quantity of BWPs capable of being activated by the UE simultaneously in different carriers and a bandwidth in the case of DC; Multiple-Input Multiple-Output (MIMO) capability information about each BWP to be supported by the UE; numerology information about each BWP to be supported by the UE, including a subcarrier spacing and a Cyclic Prefix (CP); first indication information indicating whether the UE has a cross-BWP scheduling capability; second indication information indicating whether the UE has a fast switching capability, i.e., indicating whether the UE has a transceiving capability of rapidly retuning from one BWP to another BWP provided that a certain performance requirement has been met; information about a retuning time length when the UE has the fast switching capability; BWP measurement gap capability information about the UE, i.e., information indicating whether a measurement gap needs to be provided for the measurement of another BWP when the UE operates at a certain BWP; third indication information indicating whether the UE has a capability of measuring, at a current BWP, different measurement items of the current BWP, i.e., indicating whether the UE has a capability of measuring, at a certain BWP, different measurement items of the BWP; fourth indication information indicating whether the UE has a capability of measuring, at one BWP, different measurement items of the other BWP; fifth indication information indicating whether a measurement gap needs to be configured for the UE when the UE has the capability of measuring, at one BWP, different measurement items of the other BWP, i.e., indicating whether the measurement gap needs to be configured for the UE during the measurement of a certain measurement item; sixth indication information indicating whether a measurement gap needs to be configured for the UE when the UE needs to transmit an SRS; and seventh indication information indicating whether a measurement gap needs to be configured for the UE when the UE performs intra-frequency multiple-beam measurement on one BWP.

The measurement items may include at least one of RSRP, RSRQ, an SINR, RSSI and CQI.

The air interface parameter set may include an air interface parameter type. The air interface parameter type may include at least one of: a first air interface parameter indicating that merely one BWP is capable of being configured or activated in a current carrier,; a second air interface parameter indicating that at least two BWPs at consecutive positions are capable of being configured or activated in the current carrier; a third air interface parameter indicating that at least two BWPs at inconsecutive positions are capable of being configured or activated in the current carrier; a fourth air interface parameter indicating that at least three BWPs at consecutive positions and inconsecutive positions are capable of being configured or activated in the current carrier; and a fifth air interface parameter indicating that at least one BWP at a predetermined position is capable of being configured or activated in the other carrier, the other carrier being a carrier other than the current carrier.

The configuration module 420 includes: a configuration sub-module configured to configure at least one BWP and the air interface parameter set of the at least one BWP for the UE in accordance with the UE capability information; and a first transmission sub-module configured to transmit the air interface parameter set of the at least one BWP to the UE through a broadcast message or preset signaling.

The first transmission sub-module includes a first transmission unit configured to transmit information about the correspondence between the uplink and downlink BWPs in the air interface parameter set of the at least one BWP to the UE through the broadcast message or the preset signaling. The uplink and downlink BWPs are a BWP pair consisting of an uplink BWP and a downlink BWP. The information about the correspondence between the uplink and downlink BWPs includes at least one of information about a feedback relationship between the uplink and downlink BWPs, scheduling information about the uplink and downlink BWPs, information about TA of the uplink and downlink BWPs, and path loss information about the uplink and downlink BWPs.

The first transmission unit may include: a first transmission sub-unit configured to transmit the information about the correspondence between the uplink and downlink BWPs in the air interface parameter set of the at least one BWP to the UE through carrying a configuration of one of the uplink and downlink BWPs in a configuration of the other one of the uplink and downlink BWPs; or a second transmission sub-unit configured to transmit the information about the correspondence between the uplink and downlink BWPs in the air interface parameter set of the at least one BWP to the UE through providing the uplink and downlink BWPs with a same configuration; or a third transmission sub-unit configured to transmit the information about the correspondence between the uplink and downlink BWPs in the air interface parameter set of the at least one BWP to the UE through configuring a predetermined variable.

The first transmission sub-module may further include an indication unit configured to, when the information about the correspondence between the uplink and downlink BWPs indicates that one downlink BWP corresponds to a plurality of uplink feedback BWPs, modify an uplink feedback BWP adopted by the UE for the uplink transmission through the preset signaling.

The network device 400 may further include: a second reception module configured to receive request information for requesting OSI from the UE, the request information carrying the UE capability information about the UE; and a first transmission module configured to transmit the OSI requested by the request information to the UE in accordance with the UE capability information through the at least one BWP configured for the UE.

The second reception module may include a first reception sub-module configured to receive the request information for requesting the OSI from the UE through MSG1 or MSG3.

The network device 400 may further include: a second transmission module configured to transmit L1/L2/L3 measurement configuration information at a designated BWP of the at least one BWP to the UE in accordance with the air interface parameter set of the at least one BWP; a third reception module configured to receive measurement report information reported by the UE after the measurement in accordance with the measurement configuration information; and an updating module configured to update the air interface parameter set for the UE in accordance with the measurement report information.

The updating module may include a first updating sub-module configured to, when the measurement report information indicates that it is necessary to perform BWP switching, configure indication information indicating whether or not to configure a measurement gap in the air interface parameter set.

The network device 400 may further include a third transmission module configured to, when it is necessary to add or modify the BWPs for the UE, transmit information about the to-be-added or to-be-modified BWPs to the UE. The information about the BWPs may include at least one of index information about each to-be-added or to-be-modified BWP, central frequency point information about each to-be-added or to-be-modified BWP, bandwidth information about each to-be-added or to-be-modified BWP, antenna configuration information about each to-be-added or to-be-modified BWP, numerology information about each to-be-added or to-be-modified BWP, uplink/downlink BWP configuration information corresponding to each to-be-added or to-be-modified BWP, configuration information about an RACH for the UE with respect to each to-be-added or to-be-modified BWP, information about a power control parameter of the UE with respect to each to-be-added or to-be-modified BWP, cross-BWP scheduling configuration information, and configuration information about a physical channel for the UE with respect to each to-be-added or to-be-modified BWP.

The network device 400 may further include a fourth transmission module configured to, when it is necessary to delete the BWPs for the UE, transmit information about a list of the to-be-deleted BWPs to the UE.

It should be appreciated that, according to the embodiments of the present disclosure, upon the receipt of the UE capability information reported by the UE, the network device may flexibly configure at least one BWP for the UE and the air interface parameter set of the at least one BWP in accordance with the UE capability information. As a result, it is able to configure the air interface parameters in accordance with the BWPs which cannot be solved in the related art.

In order to achieve the above-mentioned purposes in a better manner, the present disclosure further provides in some embodiments a network device, including a processor, a memory, and a computer program stored in the memory and executed by the processor. The processor is configured to execute the computer program, so as to implement the above-mentioned BWP configuration method. The present disclosure further provides in some embodiments a computer-readable storage medium storing therein a computer program. The computer program is executed by a processor so as to implement the above-mentioned BWP configuration method.

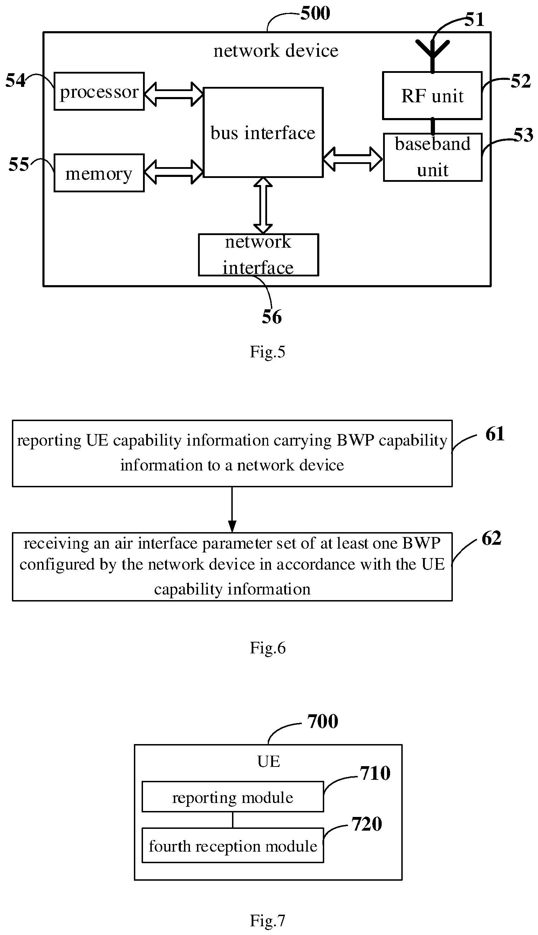

The present disclosure further provides in some embodiments a network device 500 which, as shown in Fig.5, includes an antenna 51, a Radio Frequency (RF) unit 52, and a baseband unit 53. The antenna 51 is connected to the RF unit 52. In an uplink direction, the RF unit 52 is configured to receive information via the antenna 51, and transmit the received information to the baseband unit 53 for processing. In a downlink direction, the baseband unit 53 is configured to process to-be-transmitted information, and transmit the processed information to the RF unit 52. The RF unit 52 is configured to process the received information and transmit the processed information via the antenna 51.

A frequency band processing unit may be located within the baseband unit 53, so that the above method for the network device may be implemented within the baseband unit 53. The baseband unit 53 may include a processor 54 and a memory 55.

The baseband unit 53 may, e.g., include at least one baseband board on which a plurality of chips is located, as shown in Fig.5. One chip may be, e.g., the processor 54 connected to the memory 55 and configured to call a program stored in the memory 55 so as to perform operations for the network device in the above-mentioned method embodiments.

The baseband unit 53 may further include a network interface 56 configured to exchange information with the RF unit 52. The network interface may be, e.g., a Common Public Radio Interface (CPRI).

Here, the processor may include merely one processor, or a plurality of processing elements. For example, the processor may be a CPU, an ASIC, or one or more ICs configured to implement the above-mentioned method for the network device, e.g., one or more DSPs, or one or more FPGAs. The memory may include merely one memory, or a plurality of storage elements.

It should be appreciated that, the memory 55 may be a volatile memory, a nonvolatile memory or both. The nonvolatile memory may be a Read-Only Memory (ROM), a Programmable ROM (PROM), an Erasable PROM (EPROM), an electrically EPROM (EEPROM) or a flash memory. The volatile memory may be a Random Access Memory (RAM) which serves as an external high-speed cache. Illustratively but nonrestrictively, the RAM may include Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM) or Direct Rambus RAM (DRRAM). The memory 55 intends to include, but not limited to, the above-mentioned and any other appropriate memories.

To be specific, in some embodiments of the present disclosure, the network device may further include a computer program stored in the memory 55 and executed by the processor 54. The processor 54 is configured to call the computer program in the memory 55 so as to implement the method executed by the modules in Fig.4.

To be specific, the processor 54 is further configured to call the computer program, so as to: receive the UE capability information carrying the BWP capability information reported by the UE; and configure the air interface parameter set of the at least one BWP for the UE in accordance with the UE capability information. The air interface parameter set may include at least one air interface parameter of the BWP.

To be specific, the UE capability information may include at least one of: capability information about the maximum quantity of BWPs capable of being configured for the UE simultaneously for uplink or downlink transmission and a bandwidth; capability information about the maximum quantity of BWPs capable of being activated by the UE simultaneously for the uplink or downlink transmission and a bandwidth; capability information about the quantity of consecutive or inconsecutive BWPs in a same carrier capable of being configured for the UE simultaneously and a bandwidth; capability information about the quantity of consecutive or inconsecutive BWPs in a same carrier capable of being activated by the UE simultaneously and a bandwidth; capability information about the quantity of BWPs capable of being configured for the UE simultaneously in different carriers and a bandwidth in the case of Carrier Aggregation (CA); capability information about the quantity of BWPs capable of being configured for the UE simultaneously in different carriers and a bandwidth in the case of Dual Connectivity (DC); capability information about the quantity of BWPs capable of being activated by the UE simultaneously in different carriers and a bandwidth in the case of CA; capability information about the quantity of BWPs capable of being activated by the UE simultaneously in different carriers and a bandwidth in the case of DC; Multiple-Input Multiple-Output (MIMO) capability information about each BWP to be supported by the UE; numerology information about each BWP to be supported by the UE, including a subcarrier spacing and a Cyclic Prefix (CP); first indication information indicating whether the UE has a cross-BWP scheduling capability; second indication information indicating whether the UE has a fast switching capability, i.e., indicating whether the UE has a transceiving capability of rapidly retuning from one BWP to another BWP provided that a certain performance requirement has been met; information about a retuning time length when the UE has the fast switching capability; BWP measurement gap capability information about the UE, i.e., information indicating whether a measurement gap needs to be provided for the measurement of another BWP when the UE operates at a certain BWP; third indication information indicating whether the UE has a capability of measuring, at a current BWP, different measurement items of the current BWP, i.e., indicating whether the UE has a capability of measuring, at a certain BWP, different measurement items of the BWP; fourth indication information indicating whether the UE has a capability of measuring, at one BWP, different measurement items of the other BWP; fifth indication information indicating whether a measurement gap needs to be configured for the UE when the UE has the capability of measuring, at one BWP, different measurement items of the other BWP, i.e., indicating whether the measurement gap needs to be configured for the UE during the measurement of a certain measurement item; sixth indication information indicating whether a measurement gap needs to be configured for the UE when the UE needs to transmit an SRS; and seventh indication information indicating whether a measurement gap needs to be configured for the UE when the UE performs intra-frequency multiple-beam measurement on one BWP.

To be specific, the measurement items may include at least one of RSRP, RSRQ, an SINR, RSSI and CQI.

To be specific, the air interface parameter set may include an air interface parameter type. The air interface parameter type may include at least one of: a first air interface parameter indicating that merely one BWP is capable of being configured or activated in a current carrier; a second air interface parameter indicating that at least two BWPs at consecutive positions are capable of being configured or activated in the current carrier; a third air interface parameter indicating that at least two BWPs at inconsecutive positions are capable of being configured or activated in the current carrier; a fourth air interface parameter indicating that at least three BWPs at consecutive positions and inconsecutive positions are capable of being configured or activated in the current carrier; and a fifth air interface parameter indicating that at least one BWP at a predetermined position is capable of being configured or activated in the other carrier, the other carrier being a carrier other than the current carrier.

To be specific, the processor 54 is further configured to call the computer program so as to: configure at least one BWP and the air interface parameter set of the at least one BWP for the UE in accordance with the UE capability information; and transmit the air interface parameter set of the at least one BWP to the UE through a broadcast message or preset signaling.

To be specific, the processor 54 is further configured to call the computer program, so as to transmit information about the correspondence between the uplink and downlink BWPs in the air interface parameter set of the at least one BWP to the UE through the broadcast message or the preset signaling. The uplink and downlink BWPs may be a BWP pair consisting of an uplink BWP and a downlink BWP. The information about the correspondence between the uplink and downlink BWPs may include at least one of information about a feedback relationship between the uplink and downlink BWPs, scheduling information about the uplink and downlink BWPs, information about TA of the uplink and downlink BWPs, and path loss information about the uplink and downlink BWPs.

To be specific, the processor 54 is further configured to call the computer program so as to: transmit the information about the correspondence between the uplink and downlink BWPs in the air interface parameter set of the at least one BWP to the UE through carrying a configuration of one of the uplink and downlink BWPs in a configuration of the other one of the uplink and downlink BWPs; or transmit the information about the correspondence between the uplink and downlink BWPs in the air interface parameter set of the at least one BWP to the UE through providing the uplink and downlink BWPs with a same configuration; or transmit the information about the correspondence between the uplink and downlink BWPs in the air interface parameter set of the at least one BWP to the UE through configuring a predetermined variable.

To be specific, the processor 54 is further configured to call the computer program, so as to, when the information about the correspondence between the uplink and downlink BWPs indicates that one downlink BWP corresponds to a plurality of uplink feedback BWPs, modify an uplink feedback BWP adopted by the UE for the uplink transmission through the preset signaling.

To be specific, the processor 54 is further configured to call the computer program, so as to: receive request information for requesting OSI from the UE, the request information carrying the UE capability information about the UE; and transmit the OSI requested by the request information to the UE in accordance with the UE capability information through the at least one BWP configured for the UE.

To be specific, the processor 54 is further configured to call the computer program, so as to receive the request information for requesting the OSI from the UE through MSG1 or MSG3.

To be specific, the processor 54 is further configured to call the computer program, so as to: transmit L1/L2/L3 measurement configuration information at a designated BWP of the at least one BWP to the UE in accordance with the air interface parameter set of the at least one BWP; receive measurement report information reported by the UE after the measurement in accordance with the measurement configuration information; and update the air interface parameter set for the UE in accordance with the measurement report information.

To be specific, the processor 54 is further configured to call the computer program, so as to, when the measurement report information indicates that it is necessary to perform BWP switching, configure indication information indicating whether or not to configure a measurement gap in the air interface parameter set.

To be specific, the processor 54 is further configured to call the computer program, so as to, when it is necessary to add or modify the BWPs for the UE, transmit information about the to-be-added or to-be-modified BWPs to the UE. The information about the BWPs may include at least one of index information about each to-be-added or to-be-modified BWP, central frequency point information about each to-be-added or to-be-modified BWP, bandwidth information about each to-be-added or to-be-modified BWP, antenna configuration information about each to-be-added or to-be-modified BWP, numerology information about each to-be-added or to-be-modified BWP, uplink/downlink BWP configuration information corresponding to each to-be-added or to-be-modified BWP, configuration information about an RACH for the UE with respect to each to-be-added or to-be-modified BWP, information about a power control parameter of the UE with respect to each to-be-added or to-be-modified BWP, cross-BWP scheduling configuration information, and configuration information about a physical channel for the UE with respect to each to-be-added or to-be-modified BWP.

To be specific, the processor 54 is further configured to call the computer program, so as to, when it is necessary to delete the BWPs for the UE, transmit information about a list of the to-be-deleted BWPs to the UE.

The network device may be a Base Transceiver Station (BTS) in a Global System of Mobile Communication (GSM) system or a Code Division Multiple Access (CDMA) system, a Node B (NB) in a Wideband Code Division Multiple Access (WCDMA) system, an Evolved Node B (eNB, or eNodeB) in an LTE system, a relay or an access point, or a base station in a 5G network, which will not be particularly defined herein.

According to the embodiments of the present disclosure, upon the receipt of the UE capability information reported by the UE, the network device may flexibly configure at least one BWP for the UE and the air interface parameter set of the at least one BWP in accordance with the UE capability information. As a result, it is able to configure the air interface parameters in accordance with the BWPs which cannot be solved in related art.

The BWP configuration method for the network device has been described hereinabove, and a BWP configuration method applied for a UE will be described hereinafter in conjunction with the drawings.

As shown in Fig.6, the present disclosure further provides in some embodiments a BWP configuration method applied for a UE, which includes the following Steps 61 and 62.

Step 61: reporting UE capability information carrying BWP capability information to a network device.

The UE capability information may be used to indicate a UE air interface capability, especially the UE air interface capability based on BWPs.

Step 62: receiving an air interface parameter set of at least one BWP configured by the network device in accordance with the UE capability information. The air interface parameter set may include at least one air interface parameter of the BWP.

Subsequent to Step 62, the BWP configuration method may further include: receiving information about to-be-added or to-be-modified BWPs from the network device; and receiving information about a list of to-be-deleted BWPs from the network device. In other words, when it is necessary to add or modify the BWPs for the UE, the network device may transmit the information about the to-be-added or to-be-modified BWPs to the UE, and when it is necessary to delete the BWPs for the UE, the network device may transmit the information about the list of the to-be-deleted BWPs to the UE.

The information about the BWPs may include at least one of index information about each to-be-added or to-be-modified BWP, central frequency point information about each to-be-added or to-be-modified BWP, bandwidth information about each to-be-added or to-be-modified BWP, antenna configuration information about each to-be-added or to-be-modified BWP, numerology information about each to-be-added or to-be-modified BWP, uplink/downlink BWP configuration information corresponding to each to-be-added or to-be-modified BWP, configuration information about a Random Access Channel (RACH) for the UE with respect to each to-be-added or to-be-modified BWP, information about a power control parameter of the UE with respect to each to-be-added or to-be-modified BWP, cross-BWP scheduling configuration information, and configuration information about a physical channel for the UE with respect to each to-be-added or to-be-modified BWP.

The measurement items in the third indication information, the fourth indication information and the fifth indication information may include at least one of RSRP, RSRQ, an SINR, RSSI and CQI.

The air interface parameter set may include an air interface parameter type. The air interface parameter type may include at least one of: a first air interface parameter indicating that merely one BWP is capable of being configured or activated in a current carrier,; a second air interface parameter indicating that at least two BWPs at consecutive positions are capable of being configured or activated in the current carrier; a third air interface parameter indicating that at least two BWPs at inconsecutive positions are capable of being configured or activated in the current carrier; a fourth air interface parameter indicating that at least two BWPs at different positions are capable of being configured or activated in the current carrier; and a fifth air interface parameter indicating that at least one BWP at a predetermined position is capable of being configured or activated in the other carrier, the other carrier being a carrier other than the current carrier.

Step 62 includes receiving at least one BWP and the air interface parameter set of the at least one BWP configured by the network device in accordance with the UE capability information through a broadcast message or preset signaling.

Especially, Step 62 includes receiving information about a correspondence between uplink and downlink BWPs in the air interface parameter set of the at least one BWP configuredconfigured by the network device in accordance with the UE capability information. The uplink and downlink BWPs are a BWP pair consisting of an uplink BWP and a downlink BWP. The information about the correspondence between the uplink and downlink BWPs includes at least one of information about a feedback relationship between the uplink and downlink BWPs, scheduling information about the uplink and downlink BWPs, information about TA of the uplink and downlink BWPs, and path loss information about the uplink and downlink BWPs. The information about the feedback relationship between the uplink and downlink BWPs may include the feedback relationship such as HARQ feedback and a channel state.

Further, the receiving the information about the correspondence between the uplink and downlink BWPs in the air interface parameter set of the at least one BWP configured by the network device in accordance with the UE capability information may include, but not limited to: receiving the information about the correspondence between the uplink and downlink BWPs in the air interface parameter set of the at least one BWP configured by the network device in accordance with the UE capability information through carrying a configuration of one of the uplink and downlink BWPs in a configuration of the other one of the uplink and downlink BWPs; or receiving the information about the correspondence between the uplink and downlink BWPs in the air interface parameter set of the at least one BWP configured by the network device in accordance with the UE capability information through providing the uplink and downlink BWPs with a same configuration; or receiving the information about the correspondence between the uplink and downlink BWPs in the air interface parameter set of the at least one BWP configured by the network device in accordance with the UE capability information through configuring a predetermined variable.

In addition, subsequent to Step 62, the BWP configuration method may further include: transmitting request information for requesting OSI to the network device in accordance with the air interface parameter set; and receiving the OSI requested by the request information from the network device through the at least one BWP configured for the UE.

To be specific, the transmitting the request information for requesting the OSI may include transmitting the request information for requesting the OSI to the network device through MSG1 or MSG3. During the requesting of the OSI, when a default BWP has been indicated for the requesting of the SI and the transmission of a corresponding broadcast message, it is unnecessary for the network device to acquire the UE capability. When no default BWP has been indicated for the requesting of the SI and the transmission of a corresponding broadcast message and the network device does not acquire the UE capability, it is necessary to carry the BWP-related UE capability or the BWP for receiving the broadcast message in the request information for requesting the OSI included in at least one of the MSG1 or MSG3, so that the network device may determine the BWP for the transmission of the downlink broadcast message.

In addition, subsequent to Step 62, the BWP configuration method may further include: receiving L1/L2/L3 measurement configuration information at a designated BWP of the at least one BWP from the network device; and performing measurement in accordance with the measurement configuration information to acquire measurement report information and report the measurement report information to the network device, so that the network device updates the air interface parameter set for the UE in accordance with the measurement report information.

According to the BWP configuration method in the embodiments of the present disclosure, the UE reports its own UE capability information to the network device, so that the network device flexibly configures the corresponding BWP and the air interface parameter set for the UE in accordance with the UE capability information. As a result, it is able to configure the air interface parameters in accordance with the BWPs which cannot be solved in related art.

The BWP configuration method in different scenarios has been described hereinabove, and the corresponding UE will be described hereinafter in conjunction with the drawings.

As shown in Fig.7, the present disclosure further provides in some embodiments a UE 700 capable of implementing the above-mentioned BWP configuration method, i.e., reporting UE capability information carrying BWP capability information to a network device, and receiving an air interface parameter set of at least one BWP configured by the network device in accordance with the UE capability information, with a same technical effect. The UE 700 includes: a reporting module 710 configured to report the UE capability information carrying the BWP capability information to the network device; and a fourth reception module 720 configured to receive the air interface parameter set of at least one BWP configured by the network device in accordance with the UE capability information. The air interface parameter set may include at least one air interface parameter of the BWP.

The UE capability information may include at least one of: capability information about the maximum quantity of BWPs capable of being configured for the UE simultaneously for uplink or downlink transmission and a bandwidth; capability information about the maximum quantity of BWPs capable of being activated by the UE simultaneously for the uplink or downlink transmission and a bandwidth; capability information about the quantity of consecutive or inconsecutive BWPs in a same carrier capable of being configured for the UE simultaneously and a bandwidth; capability information about the quantity of consecutive or inconsecutive BWPs in a same carrier capable of being activated by the UE simultaneously and a bandwidth; capability information about the quantity of BWPs capable of being configured for the UE simultaneously in different carriers and a bandwidth in the case of CA; capability information about the quantity of BWPs capable of being configured for the UE simultaneously in different carriers and a bandwidth in the case of DC; capability information about the quantity of BWPs capable of being activated by the UE simultaneously in different carriers and a bandwidth in the case of CA; capability information about the quantity of BWPs capable of being activated by the UE simultaneously in different carriers and a bandwidth in the case of DC; MIMO capability information about each BWP to be supported by the UE; numerology information about each BWP to be supported by the UE; first indication information indicating whether the UE has a cross-BWP scheduling capability; second indication information indicating whether the UE has a fast switching capability; BWP measurement gap capability information about the UE; third indication information indicating whether the UE has a capability of measuring, at a current BWP, different measurement items of the current BWP; fourth indication information indicating whether the UE has a capability of measuring, at one BWP, different measurement items of the other BWP; fifth indication information indicating whether a measurement gap needs to be configured for the UE when the UE has the capability of measuring, at one BWP, different measurement items of the other BWP; sixth indication information indicating whether a measurement gap needs to be configured for the UE when the UE needs to transmit an SRS; and seventh indication information indicating whether a measurement gap needs to be configured for the UE when the UE performs intra-frequency multiple-beam measurement on one BWP.

The measurement items may include at least one of RSRP, RSRQ, an SINR, RSSI and CQI.

The air interface parameter set may include an air interface parameter type. The air interface parameter type may include at least one of: a first air interface parameter indicating that merely one BWP is capable of being configured or activated in a current carrier,; a second air interface parameter indicating that at least two BWPs at consecutive positions are capable of being configured or activated in the current carrier; a third air interface parameter indicating that at least two BWPs at inconsecutive positions are capable of being configured or activated in the current carrier; a fourth air interface parameter indicating that at least two BWPs at different positions are capable of being configured or activated in the current carrier; and a fifth air interface parameter indicating that at least one BWP at a predetermined position is capable of being configured or activated in the other carrier, the other carrier being a carrier other than the current carrier.

The fourth reception module 720 includes a second reception sub-module configured to receive at least one BWP and the air interface parameter set of the at least one BWP configured by the network device in accordance with the UE capability information through a broadcast message or preset signaling.

The second reception sub-module includes a first reception unit configured to receive information about a correspondence between uplink and downlink BWPs in the air interface parameter set of the at least one BWP configured by the network device in accordance with the UE capability information. The uplink and downlink BWPs are a BWP pair consisting of an uplink BWP and a downlink BWP. The information about the correspondence between the uplink and downlink BWPs includes at least one of information about a feedback relationship between the uplink and downlink BWPs, scheduling information about the uplink and downlink BWPs, information about TA of the uplink and downlink BWPs, and path loss information about the uplink and downlink BWPs.

The first reception unit may include: a first reception sub-unit configured to receive the information about the correspondence between the uplink and downlink BWPs in the air interface parameter set of the at least one BWP configured by the network device in accordance with the UE capability information through carrying a configuration of one of the uplink and downlink BWPs in a configuration of the other one of the uplink downlink BWPs; or a second reception sub-unit configured to receive the information about the correspondence between the uplink and downlink BWPs in the air interface parameter set of the at least one BWP configured by the network device in accordance with the UE capability information through providing the uplink and downlink BWPs with a same configuration; or a third reception sub-unit configured to receive the information about the correspondence between the uplink and downlink BWPs in the air interface parameter set of the at least one BWP configured by the network device in accordance with the UE capability information through configuring a predetermined variable.

The UE 700 may include: a fifth transmission module configured to transmit request information for requesting OSI to the network device in accordance with the air interface parameter set; and a fifth reception module configured to receive the OSI requested by the request information from the network device through the at least one BWP configured for the UE.

The fifth transmission module may include a second transmission sub-module configured to transmit the request information for requesting the OSI to the network device through MSG1 or MSG3.

The UE 700 may further include: a sixth reception module configured to receive L1/L2/L3 measurement configuration information at a designated BWP of the at least one BWP form the network device; and a sixth transmission module configured to perform measurement in accordance with the measurement configuration information to acquire measurement report information and report the measurement report information to the network device, so that the network device updates the air interface parameter set for the UE in accordance with the measurement report information.

The UE 700 may further include a seventh reception module configured to receive information about to-be-added or to-be-modified BWPs from the network device. The information about the BWPs may include at least one of index information about each to-be-added or to-be-modified BWP, central frequency point information about each to-be-added or to-be-modified BWP, bandwidth information about each to-be-added or to-be-modified BWP, antenna configuration information about each to-be-added or to-be-modified BWP, numerology information about each to-be-added or to-be-modified BWP, uplink/downlink BWP configuration information corresponding to each to-be-added or to-be-modified BWP, configuration information about a Random Access Channel (RACH) for the UE with respect to each to-be-added or to-be-modified BWP, information about a power control parameter of the UE with respect to each to-be-added or to-be-modified BWP, cross-BWP scheduling configuration information, and configuration information about a physical channel for the UE with respect to each to-be-added or to-be-modified BWP.

The UE 700 may further include an eighth reception module configured to receive information about a list of to-be-deleted BWPs from the network device.

It should be appreciated that, according to the embodiments of the present disclosure, the UE reports its own UE capability information to the network device, so that the network device flexibly configures the corresponding BWP and the air interface parameter set for the UE in accordance with the UE capability information. As a result, it is able to configure the air interface parameters in accordance with the BWPs which cannot be solved in related art.

It should be further appreciated that, the above modules of the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, these modules may be stored in the memory of the above-mentioned device in the form of a program code, and may be called and executed by a processing element of the above-mentioned device so as to achieve the above functions of the determination module. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

In order to achieve the above-mentioned purposes in a better manner, the present disclosure further provides in some embodiments a UE, including a processor, a memory, and a computer program stored in the memory and executed by the processor. The processor is configured to execute the computer program, so as to implement the above-mentioned BWP configuration method. The present disclosure further provides in some embodiments a computer-readable storage medium storing therein a computer program. The computer program is executed by a processor so as to implement the above-mentioned BWP configuration method.

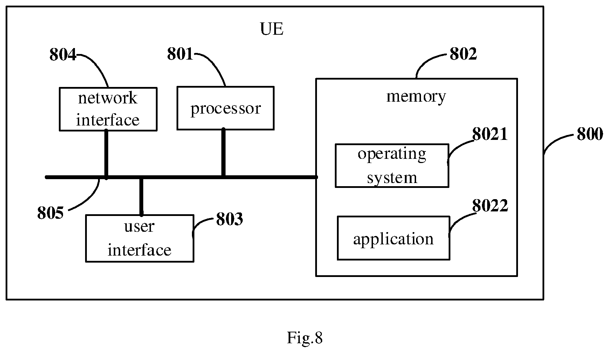

As shown in Fig.8, the present disclosure further provides in some embodiments a UE 800, including at least one processor 801, a memory 802, a user interface 803 and a network interface 804. The components of the UE 800 may be coupled together through a bus system 805. It should be appreciated that, the bus system 805 is configured to achieve connection and communication among the components. Apart from a data bus, the bus system 805 may further include a power source bus, a control bus and a state signal bus. For clarification, all these buses in Fig.8 may be collectively called as bus system 805.

The user interface 803 may include a display, a keyboard or a pointing device (e.g., mouse, track ball, touch plate or touch panel).

It should be appreciated that, the memory 802 may be a volatile memory, a nonvolatile memory or both. The nonvolatile memory may be a Read-Only Memory (ROM), a Programmable ROM (PROM), an Erasable PROM (EPROM), an electrically EPROM (EEPROM) or a flash memory. The volatile memory may be a Random Access Memory (RAM) which serves as an external high-speed cache. Illustratively but nonrestrictively, the RAM may include Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM) or Direct Rambus RAM (DRRAM). The memory 802 intends to include, but not limited to, the above-mentioned and any other appropriate memories.

In a possible embodiment of the present disclosure, the following elements may be stored in the memory 802: an executable module or data structure, a subset or an extended set thereof, an operating system 8021 and an application 8022.

The operating system 8021 may include various system programs, e.g., a framework layer, a core layer and a driving layer, so as to implement various basic services and process hardware-based tasks. The application 8022 may include various applications, e.g., Media Player and Browser, so as to implement various application services. The programs for implementing the above-mentioned method may be included in the application 8022.

In the embodiments of the present disclosure, the UE 800 may further include a computer program stored in the memory 802 and executed by the processor 801, e.g., a computer program in the application 8022. The processor 801 is configured to execute the compute program, so as to: report UE capability information carrying BWP capability information to a network device; and receive an air interface parameter set of at least one BWP configured by the network device in accordance with the UE capability information. The air interface parameter set may include at least one air interface parameter of the BWP.

The above-mentioned method may be applied to, or implemented by, the processor 801. The processor 801 may be an integrated circuit (IC) having a signal processing capability. During the implementation, the steps of the above-mentioned method may be completed through an integrated logic circuit of hardware in the processor 801 or instructions in the form of software. The processor 801 may be a general-purpose processor, a digital signal processor, an application-specific integrated circuit (ASIC), a field programmable gate array (FPGA) or any other programmable logic element, a discrete gate or transistor logic element, or a discrete hardware assembly, which may be used to implement or execute the methods, steps or logic diagrams in the embodiments of the present disclosure. The general purpose processor may be a microprocessor or any other conventional processor. The steps of the method in the embodiments of the present disclosure may be directly implemented by the processor in the form of hardware, or a combination of hardware and software modules in the processor. The software module may be located in a known storage medium such as an RAM, a flash memory, an ROM, a PROM, an EEPROM, or a register. The storage medium may be located in the memory 802, and the processor 801 may read information stored in the memory 802 so as to implement the steps of the method in conjunction with the hardware.

It should be appreciated that, the embodiments of the present disclosure may be implemented by hardware, software, firmware, middleware, microcode or a combination thereof. For the hardware implementation, the processor may include one or more of an ASIC, a DSP, a DSP device (DSPD), a Programmable Logic Device (PLD), an FPGA, a general-purpose processor, a controller, a microcontroller, a microprocessor, any other electronic unit capable of achieving the functions in the present disclosure, or a combination thereof.

For the software implementation, the scheme in the embodiments of the present disclosure may be implemented through modules capable of achieving the functions in the present disclosure (e.g., processes or functions). Software codes may be stored in the memory and executed by the processor. The memory may be implemented inside or outside the processor.

To be specific, the UE capability information may include at least one of: capability information about the maximum quantity of BWPs capable of being configured for the UE simultaneously for uplink or downlink transmission and a bandwidth; capability information about the maximum quantity of BWPs capable of being activated by the UE simultaneously for the uplink or downlink transmission and a bandwidth; capability information about the quantity of consecutive or inconsecutive BWPs in a same carrier capable of being configured for the UE simultaneously and a bandwidth; capability information about the quantity of consecutive or inconsecutive BWPs in a same carrier capable of being activated by the UE simultaneously and a bandwidth; capability information about the quantity of BWPs capable of being configured for the UE simultaneously in different carriers and a bandwidth in the case of Carrier Aggregation (CA); capability information about the quantity of BWPs capable of being configured for the UE simultaneously in different carriers and a bandwidth in the case of Dual Connectivity (DC); capability information about the quantity of BWPs capable of being activated by the UE simultaneously in different carriers and a bandwidth in the case of CA; capability information about the quantity of BWPs capable of being activated by the UE simultaneously in different carriers and a bandwidth in the case of DC; Multiple-Input Multiple-Output (MIMO) capability information about each BWP to be supported by the UE; numerology information about each BWP to be supported by the UE, including a subcarrier spacing and a Cyclic Prefix (CP); first indication information indicating whether the UE has a cross-BWP scheduling capability; second indication information indicating whether the UE has a fast switching capability, i.e., indicating whether the UE has a transceiving capability of rapidly retuning from one BWP to another BWP provided that a certain performance requirement has been met; information about a retuning time length when the UE has the fast switching capability; BWP measurement gap capability information about the UE, i.e., information indicating whether a measurement gap needs to be provided for the measurement of another BWP when the UE operates at a certain BWP; third indication information indicating whether the UE has a capability of measuring, at a current BWP, different measurement items of the current BWP, i.e., indicating whether the UE has a capability of measuring, at a certain BWP, different measurement items of the BWP; fourth indication information indicating whether the UE has a capability of measuring, at one BWP, different measurement items of the other BWP; fifth indication information indicating whether a measurement gap needs to be configured for the UE when the UE has the capability of measuring, at one BWP, different measurement items of the other BWP, i.e., indicating whether the measurement gap needs to be configured for the UE during the measurement of a certain measurement item; sixth indication information indicating whether a measurement gap needs to be configured for the UE when the UE needs to transmit an SRS; and seventh indication information indicating whether a measurement gap needs to be configured for the UE when the UE performs intra-frequency multiple-beam measurement on one BWP.

To be specific, the measurement items may include at least one of RSRP, RSRQ, an SINR, RSSI and CQI.

The air interface parameter set may include an air interface parameter type. The air interface parameter type may include at least one of: a first air interface parameter indicating that merely one BWP is capable of being configured or activated in a current carrier,; a second air interface parameter indicating that at least two BWPs at consecutive positions are capable of being configured or activated in the current carrier; a third air interface parameter indicating that at least two BWPs at inconsecutive positions are capable of being configured or activated in the current carrier; a fourth air interface parameter indicating that at least two BWPs at different positions are capable of being configured or activated in the current carrier; and a fifth air interface parameter indicating that at least one BWP at a predetermined position is capable of being configured or activated in the other carrier, the other carrier being a carrier other than the current carrier.

To be specific, the processor 801 is further configured to execute the computer program, so as to receive at least one BWP and the air interface parameter set of the at least one BWP configured by the network device in accordance with the UE capability information through a broadcast message or preset signaling.

To be specific, the processor 801 is further configured to execute the computer program, so as to receive information about a correspondence between uplink and downlink BWPs in the air interface parameter set of the at least one BWP configured by the network device in accordance with the UE capability information. The uplink and downlink BWPs may be a BWP pair consisting of an uplink BWP and a downlink BWP. The information about the correspondence between the uplink and downlink BWPs may include at least one of information about a feedback relationship between the uplink and downlink BWPs, scheduling information about the uplink and downlink BWPs, information about TA of the uplink and downlink BWPs, and path loss information about the uplink and downlink BWPs.

To be specific, the processor 801 is further configured to execute the computer program, so as to: receive the information about the correspondence between the uplink and downlink BWPs in the air interface parameter set of the at least one BWP configured by the network device in accordance with the UE capability information through carrying a configuration of one of the uplink and downlink BWPs in a configuration of the other one of the uplink downlink BWPs; or receive the information about the correspondence between the uplink and downlink BWPs in the air interface parameter set of the at least one BWP configured by the network device in accordance with the UE capability information through providing the uplink and downlink BWPs with a same configuration; or receive the information about the correspondence between the uplink and downlink BWPs in the air interface parameter set of the at least one BWP configured by the network device in accordance with the UE capability information through configuring a predetermined variable.

To be specific, the processor 801 is further configured to execute the computer program, so as to: transmit request information for requesting OSI to the network device in accordance with the air interface parameter set; and receive the OSI requested by the request information from the network device through the at least one BWP configured for the UE.

To be specific, the processor 801 is further configured to execute the computer program, so as to transmit the request information for requesting the OSI to the network device through MSG1 or MSG3.

To be specific, the processor 801 is further configured to execute the computer program, so as to: receive L1/L2/L3 measurement configuration information at a designated BWP of the at least one BWP from the network device; and perform measurement in accordance with the measurement configuration information to acquire measurement report information and report the measurement report information to the network device, so that the network device updates the air interface parameter set for the UE in accordance with the measurement report information.

To be specific, the processor 801 is further configured to execute the computer program, so as to receive information about to-be-added or to-be-modified BWPs from the network device. The information about the BWPs may include at least one of index information about each to-be-added or to-be-modified BWP, central frequency point information about each to-be-added or to-be-modified BWP, bandwidth information about each to-be-added or to-be-modified BWP, antenna configuration information about each to-be-added or to-be-modified BWP, numerology information about each to-be-added or to-be-modified BWP, uplink/downlink BWP configuration information corresponding to each to-be-added or to-be-modified BWP, configuration information about a Random Access Channel (RACH) for the UE with respect to each to-be-added or to-be-modified BWP, information about a power control parameter of the UE with respect to each to-be-added or to-be-modified BWP, cross-BWP scheduling configuration information, and configuration information about a physical channel for the UE with respect to each to-be-added or to-be-modified BWP.

To be specific, the processor 801 is further configured to execute the computer program, so as to receive information about a list of to-be-deleted BWPs from the network device.

The UE may be a wireless UE or a wired UE. The wireless UE may be a device capable of providing voice data and/or any other service data to a user, e.g., a handheld device having a wireless connection function, or any other processing device capable of being connected to a wireless modem. The wireless UE may communicate with one or more core networks via a Radio Access Network (RAN). The wireless UE may be a mobile terminal, e.g., a mobile phone (or cellular phone), or a computer having the mobile terminal, e.g., a portable, pocket-sized, handheld, built-in or vehicle-mounted mobile device, which are capable of exchanging voice and/or data with the RAN. For example, the wireless UE may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal may also be called as system, subscriber unit, subscriber station, mobile station, mobile, remote station, remote terminal, access terminal, user terminal, user agent or user device, which will not be particularly defined herein.

According to the embodiments of the present disclosure, the UE reports own UE capability information to the network device, so that the network device flexibly configures the corresponding BWP and the air interface parameter set for the UE in accordance with the UE capability information. As a result, it is able to configure the air interface parameters in accordance with the BWPs which cannot be solved in related art.

It should be appreciated that, units and steps described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, device and units described hereinabove may refer to the corresponding procedures in the method embodiment, and thus will not be particularly defined herein.

It should be further appreciated that, the device and method may be implemented in any other ways. For example, the embodiments for the apparatus is merely for illustrative purposes, and the modules or units are provided merely on the basis of their logic functions. During the actual application, some modules or units may be combined together or integrated into another system. In addition, the coupling connection, direct coupling connection or communication connection between the modules or units may be implemented via interfaces, and the indirect coupling connection or communication connection between the modules or units may be implemented in an electrical or mechanical form or in any other form.

The units may be, or may not be, physically separated from each other. The units for displaying may be, or may not be, physical units, i.e., they may be arranged at an identical position, or distributed on a plurality of network elements. Parts or all of the units may be selected in accordance with the practical need, so as to achieve the purpose of the present disclosure.

In addition, the functional units in the embodiments of the present disclosure may be integrated into a processing unit, or the functional units may exist independently, or two or more functional units may be combined together.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be further appreciated that, the steps for executing the above-mentioned processings may be performed in a chronological order. Of course, some steps may also be performed in parallel, or independently of each other. It should be further appreciated that, after reading the descriptions of the present disclosure, it is able for a person skilled in the art, using a basic programming skill, to implement any or all steps of the method and any or all members of the device in any computing device (including a processor and a storage medium) or a network consisting of the computing devices, in the form of hardware, firmware, software or a combination thereof.

Hence, the purposes of the present disclosure may also be implemented by one program or a set of programs running on any computing device, e.g., a known general-purpose computer, or implemented merely by a program product including programs codes capable of implementing the method or device. In other words, this program product and a storage medium storing therein the program product also constitute a part of the present disclosure. Obviously, the storage medium may be any known storage medium.

In addition, the steps for executing the above-mentioned processings may be performed in a chronological order. Of course, some steps may also be performed in parallel, or independently of each other.

The above embodiments are for illustrative purposes only, but the present disclosure is not limited thereto.

## Claims

1. A Bandwidth Part, BWP, configuration method applied for a network device, comprising:
receiving (11) User Equipment, UE, capability information carrying BWP capability information reported by a UE; and
configuring (12) an air interface parameter set of at least one BWP for the UE in accordance with the UE capability information, the air interface parameter set comprising at least one air interface parameter of the BWP;
**characterized in that** the configuring (12) the air interface parameter set of the at least one BWP for the UE in accordance with the UE capability information comprises:
configuring at least one BWP and the air interface parameter set of the at least one BWP for the UE in accordance with the UE capability information; and
transmitting the air interface parameter set of the at least one BWP to the UE through a broadcast message or preset signaling;
wherein the transmitting the air interface parameter set of the at least one BWP to the UE through the broadcast message or preset signaling comprises:
transmitting information about a correspondence between uplink and downlink BWPs in the air interface parameter set of the at least one BWP to the UE through the broadcast message or the preset signaling,
wherein the uplink and downlink BWPs comprise a BWP pair consisting of an uplink BWP and a downlink BWP, and the information about the correspondence between the uplink and downlink BWPs comprises at least one of information about a feedback relationship between the uplink and downlink BWPs, scheduling information about the uplink and downlink BWPs, information about Timing Advance, TA, of the uplink and downlink BWPs, or path loss information about the uplink and downlink BWPs.

2. The BWP configuration method according to claim 1, wherein the transmitting the information about the correspondence between the uplink and downlink BWPs in the air interface parameter set of the at least one BWP to the UE comprises:
transmitting the information about the correspondence between the uplink and downlink BWPs in the air interface parameter set of the at least one BWP to the UE through carrying a configuration of one of the uplink and downlink BWPs in a configuration of the other one of the uplink downlink BWPs; or
transmitting the information about the correspondence between the uplink and downlink BWPs in the air interface parameter set of the at least one BWP to the UE through providing the uplink and downlink BWPs with a same configuration; or
transmitting the information about the correspondence between the uplink and downlink BWPs in the air interface parameter set of the at least one BWP to the UE through configuring a predetermined variable.

3. A network device (400), comprising:
a first reception module (410) configured to receive UE capability information carrying BWP capability information reported by a UE; and
a configuration module (420) configured to configure an air interface parameter set of at least one BWP for the UE in accordance with the UE capability information, the air interface parameter set comprising at least one air interface parameter of the BWP;
**characterized in that** the configuration module (420) comprises:
a configuration sub-module configured to configure at least one BWP and the air interface parameter set of the at least one BWP for the UE in accordance with the UE capability information; and
a first transmission sub-module configured to transmit the air interface parameter set of the at least one BWP to the UE through a broadcast message or preset signaling;
wherein the first transmission sub-module comprises a first transmission unit configured to transmit information about a correspondence between uplink and downlink BWPs in the air interface parameter set of the at least one BWP to the UE through the broadcast message or the preset signaling,
wherein the uplink and downlink BWPs comprise a BWP pair consisting of an uplink BWP and a downlink BWP, and the information about the correspondence between the uplink and downlink BWPs comprises at least one of information about a feedback relationship between the uplink and downlink BWPs, scheduling information about the uplink and downlink BWPs, information about TA of the uplink and downlink BWPs, or path loss information about the uplink and downlink BWPs.

4. A BWP configuration method applied for a UE, comprising:
reporting (61) UE capability information carrying BWP capability information to a network device; and
receiving (62) an air interface parameter set of at least one BWP configured by the network device in accordance with the UE capability information,
wherein the air interface parameter set comprises at least one air interface parameter of the BWP;
**characterized in that** the receiving (62) the air interface parameter set of the at least one BWP configured by the network device in accordance with the UE capability information comprises: receiving at least one BWP and the air interface parameter set of the at least one BWP configured by the network device in accordance with the UE capability information through a broadcast message or preset signaling;
wherein the receiving the at least one BWP and the air interface parameter set of the at least one BWP configured by the network device in accordance with the UE capability information comprises:
receiving information about a correspondence between uplink and downlink BWPs in the air interface parameter set of the at least one BWP configured by the network device in accordance with the UE capability information,
wherein the uplink and downlink BWPs comprise a BWP pair consisting of an uplink BWP and a downlink BWP, and the information about the correspondence between the uplink and downlink BWPs comprises at least one of information about a feedback relationship between the uplink and downlink BWPs, scheduling information about the uplink and downlink BWPs, information about TA of the uplink and downlink BWPs, or path loss information about the uplink and downlink BWPs.

5. The BWP configuration method according to claim 4, wherein the UE capability information comprises at least one of:
capability information about the maximum quantity of BWPs capable of being configured for the UE simultaneously for uplink or downlink transmission and a bandwidth;
capability information about the maximum quantity of BWPs capable of being activated by the UE simultaneously for the uplink or downlink transmission and a bandwidth;
capability information about the quantity of consecutive or inconsecutive BWPs in a same carrier capable of being configured for the UE simultaneously and a bandwidth;
capability information about the quantity of consecutive or inconsecutive BWPs in a same carrier capable of being activated by the UE simultaneously and a bandwidth;
capability information about the quantity of BWPs capable of being configured for the UE simultaneously in different carriers and a bandwidth in the case of CA;
capability information about the quantity of BWPs capable of being configured for the UE simultaneously in different carriers and a bandwidth in the case of DC;
capability information about the quantity of BWPs capable of being activated by the UE simultaneously in different carriers and a bandwidth in the case of CA;
capability information about the quantity of BWPs capable of being activated by the UE simultaneously in different carriers and a bandwidth in the case of DC;
MIMO capability information about each BWP to be supported by the UE;
numerology information about each BWP to be supported by the UE;
first indication information indicating whether the UE has a cross-BWP scheduling capability;
second indication information indicating whether the UE has a fast switching capability;
information about a retuning time length when the UE has the fast switching capability;
BWP measurement gap capability information about the UE;
third indication information indicating whether the UE has a capability of measuring, at a current BWP, different measurement items of the current BWP;
fourth indication information indicating whether the UE has a capability of measuring, at one BWP, different measurement items of the other BWP;
fifth indication information indicating whether a measurement gap needs to be configured for the UE when the UE has the capability of measuring, at one BWP, different measurement items of the other BWP;
sixth indication information indicating whether a measurement gap needs to be configured for the UE when the UE needs to transmit an SRS; and
seventh indication information indicating whether a measurement gap needs to be configured for the UE when the UE performs intra-frequency multiple-beam measurement on one BWP.

6. The BWP configuration method according to claim 4, wherein,
the air interface parameter set comprises an air interface parameter type,
the air interface parameter type comprises at least one of: a first air interface parameter indicating that merely one BWP is capable of being configured or activated in a current carrier a second air interface parameter indicating that at least two BWPs at consecutive positions are capable of being configured or activated in the current carrier; a third air interface parameter indicating that at least two BWPs at inconsecutive positions are capable of being configured or activated in the current carrier; a fourth air interface parameter indicating that at least two BWPs at different positions are capable of being configured or activated in the current carrier; or a fifth air interface parameter indicating that at least one BWP at a predetermined position is capable of being configured or activated in the other carrier, and
the other carrier is a carrier other than the current carrier.

7. The BWP configuration method according to claim 4, wherein the receiving the information about the correspondence between the uplink and downlink BWPs in the air interface parameter set of the at least one BWP configured by the network device in accordance with the UE capability information comprises:
receiving the information about the correspondence between the uplink and downlink BWPs in the air interface parameter set of the at least one BWP configured by the network device in accordance with the UE capability information through carrying a configuration of one of the uplink and downlink BWPs in a configuration of the other one of the uplink and downlink BWPs; or
receiving the information about the correspondence between the uplink and downlink BWPs in the air interface parameter set of the at least one BWP configured by the network device in accordance with the UE capability information through providing the uplink and downlink BWPs with a same configuration; or
receiving the information about the correspondence between the uplink and downlink BWPs in the air interface parameter set of the at least one BWP configured by the network device in accordance with the UE capability information through configuring a predetermined variable.

8. The BWP configuration method according to claim 4, wherein subsequent to receiving the air interface parameter set of the at least one BWP configured by the network device in accordance with the UE capability information, the BWP configuration method further comprises:
receiving L1/L2/L3 measurement configuration information at a designated BWP of the at least one BWP from the network device; and
performing measurement in accordance with the measurement configuration information to acquire measurement report information and reporting the measurement report information to the network device, so that the network device updates the air interface parameter set for the UE in accordance with the measurement report information.

9. The BWP configuration method according to claim 4, wherein subsequent to receiving the air interface parameter set of the at least one BWP configured by the network device in accordance with the UE capability information, the BWP configuration method further comprises:
receiving information about to-be-added or to-be-modified BWPs from the network device,
wherein the information about the BWPs comprises at least one of index information about each to-be-added or to-be-modified BWP, central frequency point information about each to-be-added or to-be-modified BWP, bandwidth information about each to-be-added or to-be-modified BWP, antenna configuration information about each to-be-added or to-be-modified BWP, numerology information about each to-be-added or to-be-modified BWP, uplink/downlink BWP configuration information corresponding to each to-be-added or to-be-modified BWP, configuration information about an RACH for the UE with respect to each to-be-added or to-be-modified BWP, information about a power control parameter of the UE with respect to each to-be-added or to-be-modified BWP, cross-BWP scheduling configuration information, or configuration information about a physical channel for the UE with respect to each to-be-added or to-be-modified BWP.

10. The BWP configuration method according to claim 4, wherein subsequent to receiving the air interface parameter set of the at least one BWP configured by the network device in accordance with the UE capability information, the BWP configuration method further comprises:
receiving information about a list of to-be-deleted BWPs from the network device.

11. A UE (700), comprising:
a reporting module (710) configured to report UE capability information carrying BWP capability information to a network device; and
a fourth reception module (720) configured to receive an air interface parameter set of at least one BWP configured by the network device in accordance with the UE capability information,
wherein the air interface parameter set comprises at least one air interface parameter of the BWP;
**characterized in that** the fourth reception module (720) comprises a second reception sub-module configured to receive at least one BWP and the air interface parameter set of the at least one BWP configured by the network device in accordance with the UE capability information through a broadcast message or preset signaling;
wherein the second reception sub-module comprises a first reception unit configured to receive information about a correspondence between uplink and downlink BWPs in the air interface parameter set of the at least one BWP configured by the network device in accordance with the UE capability information,
wherein the uplink and downlink BWPs comprise a BWP pair consisting of an uplink BWP and a downlink BWP, and the information about the correspondence between the uplink and downlink BWPs comprises at least one of information about a feedback relationship between the uplink and downlink BWPs, scheduling information about the uplink and downlink BWPs, information about TA of the uplink and downlink BWPs, or path loss information about the uplink and downlink BWPs.

12. The UE (700) according to claim 11, wherein the UE capability information comprises at least one of:
capability information about the maximum quantity of BWPs capable of being configured for the UE simultaneously for uplink or downlink transmission and a bandwidth;
capability information about the maximum quantity of BWPs capable of being activated by the UE simultaneously for the uplink or downlink transmission and a bandwidth;
capability information about the quantity of consecutive or inconsecutive BWPs in a same carrier capable of being configured for the UE simultaneously and a bandwidth;
capability information about the quantity of consecutive or inconsecutive BWPs in a same carrier capable of being activated by the UE simultaneously and a bandwidth;
capability information about the quantity of BWPs capable of being configured for the UE simultaneously in different carriers and a bandwidth in the case of CA;
capability information about the quantity of BWPs capable of being configured for the UE simultaneously in different carriers and a bandwidth in the case of DC;
capability information about the quantity of BWPs capable of being activated by the UE simultaneously in different carriers and a bandwidth in the case of CA;
capability information about the quantity of BWPs capable of being activated by the UE simultaneously in different carriers and a bandwidth in the case of DC;
MIMO capability information about each BWP to be supported by the UE;
numerology information about each BWP to be supported by the UE;
first indication information indicating whether the UE has a cross-BWP scheduling capability;
second indication information indicating whether the UE has a fast switching capability;
information about a retuning time length when the UE has the fast switching capability;
BWP measurement gap capability information about the UE;
third indication information indicating whether the UE has a capability of measuring, at a current BWP, different measurement items of the current BWP;
fourth indication information indicating whether the UE has a capability of measuring, at one BWP, different measurement items of the other BWP;
fifth indication information indicating whether a measurement gap needs to be configured for the UE when the UE has the capability of measuring, at one BWP, different measurement items of the other BWP;
sixth indication information indicating whether a measurement gap needs to be configured for the UE when the UE needs to transmit an SRS; and
seventh indication information indicating whether a measurement gap needs to be configured for the UE when the UE performs intra-frequency multiple-beam measurement on one BWP.

13. The UE (700) according to claim 11, wherein,
the air interface parameter set comprises an air interface parameter type,
the air interface parameter type comprises at least one of: a first air interface parameter indicating that merely one BWP is capable of being configured or activated in a current carrier a second air interface parameter indicating that at least two BWPs at consecutive positions are capable of being configured or activated in the current carrier; a third air interface parameter indicating that at least two BWPs at inconsecutive positions are capable of being configured or activated in the current carrier; a fourth air interface parameter indicating that at least two BWPs at different positions are capable of being configured or activated in the current carrier; or a fifth air interface parameter indicating that at least one BWP at a predetermined position is capable of being configured or activated in the other carrier, and
the other carrier is a carrier other than the current carrier.

14. The UE (700) according to claim 11, wherein the first reception unit comprises:
a first reception sub-unit configured to receive the information about the correspondence between the uplink and downlink BWPs in the air interface parameter set of the at least one BWP configured by the network device in accordance with the UE capability information through carrying a configuration of one of the uplink and downlink BWPs in a configuration of the other one of the uplink and downlink BWPs; or
a second reception sub-unit configured to receive the information about the correspondence between the uplink and downlink BWPs in the air interface parameter set of the at least one BWP configured by the network device in accordance with the UE capability information through providing the uplink and downlink BWPs with a same configuration; or
a third reception sub-unit configured to receive the information about the correspondence between the uplink and downlink BWPs in the air interface parameter set of the at least one BWP configured by the network device in accordance with the UE capability information through configuring a predetermined variable.

15. A computer-readable storage medium storing therein a program, **characterized in that** the program is executed by a processor so as to implement the BWP configuration method according to any one of claims 1 to 2, or implement the BWP configuration method according to any one of claims 4 to 10.

## Patentansprüche

1. Verfahren zur Konfiguration eines Bandbreitenteils, BWP, das für ein Netzwerkgerät angewendet wird, wobei das Verfahren Folgendes aufweist:
Empfangen (11) von Benutzergerät-, UE-, Fähigkeitsinformationen, die BWP-Fähigkeitsinformationen tragen, die von einem UE gemeldet werden; und
Konfigurieren (12) eines Luftschnittstellenparametersatzes von mindestens einem BWP für das UE in Übereinstimmung mit den UE-Fähigkeitsinformationen, wobei der Luftschnittstellenparametersatz mindestens einen Luftschnittstellenparameter des BWP aufweist,
**dadurch gekennzeichnet, dass** das Konfigurieren (12) des Luftschnittstellenparametersatzes von dem mindestens einen BWP für das UE in Übereinstimmung mit den UE-Fähigkeitsinformationen Folgendes aufweist:
Konfigurieren mindestens eines BWP und des Luftschnittstellenparametersatzes von dem mindestens einen BWP für das UE in Übereinstimmung mit den UE-Fähigkeitsinformationen; und
Übertragen des Luftschnittstellenparametersatzes von dem mindestens einen BWP an das UE durch eine Broadcast-Nachricht oder eine voreingestellte Signalisierung;
wobei das Übertragen des Luftschnittstellenparametersatzes von dem mindestens einen BWP an das UE durch die Broadcast-Nachricht oder die voreingestellte Signalisierung Folgendes aufweist:
Übertragen von Informationen über eine Übereinstimmung zwischen Uplink-und Downlink-BWPs in dem Luftschnittstellenparametersatz von dem mindestens einen BWP an das UE durch die Broadcast-Nachricht oder die voreingestellte Signalisierung,
wobei die Uplink- und Downlink-BWPs ein BWP-Paar aufweisen, das aus einem Uplink-BWP und einem Downlink-BWP besteht, und die Informationen über die Übereinstimmung zwischen den Uplink- und Downlink-BWPs Informationen über eine Rückkopplungsbeziehung zwischen den Uplink- und Downlink-BWPs, und/oder Zeitplanungsinformationen über die Uplink- und Downlink-BWPs, und/oder Informationen über Timing Advance, TA, der Uplink- und Downlink-BWPs und/oder Pfadverlustinformationen über die Uplink- und Downlink-BWPs aufweisen.

2. Verfahren zur Konfiguration des BWP nach Anspruch 1, wobei das Übertragen von den Informationen über die Übereinstimmung zwischen den Uplink-und Downlink-BWPs in dem Luftschnittstellenparametersatz von dem mindestens einen BWP an das UE Folgendes aufweist:
Übertragen der Informationen über die Übereinstimmung zwischen den Uplink-und Downlink-BWPs in dem Luftschnittstellenparametersatz von dem mindestens einen BWP an das UE durch Übertragen einer Konfiguration von einem der Uplink-und Downlink-BWPs in einer Konfiguration des anderen der Uplink-und Downlink-BWPs; oder
Übertragen der Informationen über die Übereinstimmung zwischen den Uplink-und Downlink-BWPs in dem Luftschnittstellenparametersatz von dem mindestens einen BWP an das UE durch Bereitstellen der Uplink- und Downlink-BWPs mit einer gleichen Konfiguration; oder
Übertragen der Informationen über die Übereinstimmung zwischen den Uplink-und Downlink-BWPs in dem Luftschnittstellenparametersatz von dem mindestens einen BWP an das UE durch Konfigurieren einer vorbestimmten Variablen.

3. Netzwerkgerät (400) mit
einem ersten Empfangsmodul (410), das so konfiguriert ist, dass es UE-Fähigkeitsinformationen empfängt, die BWP-Fähigkeitsinformationen enthalten, die von einem UE gemeldet werden; und
einem Konfigurationsmodul (420), das so konfiguriert ist, dass es einen Luftschnittstellenparametersatz von mindestens einem BWP für das UE in Übereinstimmung mit den UE-Fähigkeitsinformationen konfiguriert, wobei der Luftschnittstellenparametersatz mindestens einen Luftschnittstellenparameter des BWP aufweist;
**dadurch gekennzeichnet, dass** das Konfigurationsmodul (420) Folgendes aufweist:
ein Konfigurationsuntermodul, das so konfiguriert ist, dass es mindestens einen BWP und den Luftschnittstellenparametersatz von dem mindestens einen BWP für das UE in Übereinstimmung mit den UE-Fähigkeitsinformationen konfiguriert; und
ein erstes Übertragungsuntermodul, das so konfiguriert ist, dass es den Luftschnittstellenparametersatz von dem mindestens einen BWP durch eine Broadcast-Nachricht oder eine voreingestellte Signalisierung an das UE überträgt,
wobei das erste Übertragungsuntermodul eine erste Übertragungseinheit aufweist, die so konfiguriert ist, dass sie Informationen über eine Überstimmung zwischen Uplink- und Downlink-BWPs in dem Luftschnittstellenparametersatz von dem mindestens einen BWP an das UE durch die Broadcast-Nachricht oder die voreingestellte Signalisierung überträgt,
wobei die Uplink- und Downlink-BWPs ein BWP-Paar aufweisen, das aus einem Uplink-BWP und einem Downlink-BWP besteht, und die Informationen über die Übereinstimmung zwischen den Uplink- und Downlink-BWPs mindestens Informationen über eine Rückkopplungsbeziehung zwischen den Uplink- und Downlink-BWPs, und/oder Zeitplanungsinformationen über die Uplink- und Downlink-BWPs, und/oder Informationen über TA der Uplink- und Downlink-BWPs und/oder Pfadverlustinformationen über die Uplink- und Downlink-BWPs aufweisen.

4. Verfahren zur Konfiguration des BWP, das für ein UE angewendet wird, wobei das Verfahren Folgendes aufweist:
Melden (61) von UE-Fähigkeitsinformationen, die BWP-Fähigkeitsinformationen enthalten, an ein Netzwerkgerät; und
Empfangen (62) eines Luftschnittstellenparametersatzes von mindestens einem BWP, der von dem Netzwerkgerät in Übereinstimmung mit den UE-Fähigkeitsinformationen konfiguriert wird,
wobei der Luftschnittstellenparametersatz mindestens einen Luftschnittstellenparameter des BWP aufweist;
**dadurch gekennzeichnet, dass** das Empfangen (62) des Luftschnittstellenparametersatzes von dem mindestens einen BWP, der von dem Netzwerkgerät in Übereinstimmung mit den UE-Fähigkeitsinformationen konfiguriert wird, Folgendes aufweist: Empfangen mindestens eines BWP und des Luftschnittstellenparametersatzes von dem mindestens einen BWP, der von dem Netzwerkgerät in Übereinstimmung mit den UE-Fähigkeitsinformationen konfiguriert wird, durch eine Broadcast-Nachricht oder eine voreingestellte Signalisierung;
wobei das Empfangen des mindestens einen BWP und des Luftschnittstellenparametersatzes von dem mindestens einen BWP, der von dem Netzwerkgerät in Übereinstimmung mit den UE-Fähigkeitsinformationen konfiguriert wird, Folgendes aufweist:
Empfangen von Informationen über eine Übereinstimmung zwischen Uplink-und Downlink-BWPs in dem Luftschnittstellenparametersatz von dem mindestens einen BWP, der von dem Netzwerkgerät in Übereinstimmung mit den UE-Fähigkeitsinformationen konfiguriert wird,
wobei die Uplink- und Downlink-BWPs ein BWP-Paar aufweisen, das aus einem Uplink-BWP und einem Downlink-BWP besteht, und die Informationen über die Übereinstimmung zwischen den Uplink- und Downlink-BWPs Informationen über eine Rückkopplungsbeziehung zwischen den Uplink- und Downlink-BWPs, und/oder Zeitplanungsinformationen über die Uplink- und Downlink-BWPs, und/oder Informationen über TA der Uplink- und Downlink-BWPs und/oder Pfadverlustinformationen über die Uplink- und Downlink-BWPs aufweisen.

5. Verfahren zur Konfiguration des BWP nach Anspruch 4, wobei die UE-Fähigkeitsinformationen Folgendes aufweisen:
Fähigkeitsinformationen über die maximale Anzahl von BWPs, die für das UE gleichzeitig für die Uplink- oder Downlink-Übertragung konfiguriert werden können, und eine Bandbreite; und/oder
Fähigkeitsinformationen über die maximale Anzahl von BWPs, die von dem UE gleichzeitig für die Uplink- oder Downlink-Übertragung aktiviert werden können, und eine Bandbreite; und/oder
Fähigkeitsinformationen über die Anzahl der aufeinanderfolgenden oder nicht aufeinanderfolgenden BWPs auf einen gleichen Träger, die für das UE gleichzeitig konfiguriert werden können, und eine Bandbreite; und/oder
Fähigkeitsinformationen über die Anzahl der aufeinanderfolgenden oder nicht aufeinanderfolgenden BWPs auf einen gleichen Träger, die von dem UE gleichzeitig aktiviert werden können, und eine Bandbreite; und/oder
Fähigkeitsinformationen über die Anzahl der BWPs, die für das UE gleichzeitig in verschiedenen Trägern konfiguriert werden können, und eine Bandbreite im Fall von CA; und/oder
Fähigkeitsinformationen über die Anzahl der BWPs, die für das UE gleichzeitig in verschiedenen Trägern konfiguriert werden können, und eine Bandbreite im Fall von DC; und/oder
Fähigkeitsinformationen über die Anzahl der BWPs, die von dem UE gleichzeitig auf verschiedenen Trägern aktiviert werden können, und eine Bandbreite im Fall von CA; und/oder
Fähigkeitsinformationen über die Anzahl der BWPs, die vom UE gleichzeitig auf verschiedenen Trägern aktiviert werden können, und eine Bandbreite im Fall von DC; und/oder
MIMO-Fähigkeitsinformationen über jeden BWP, der von dem UE unterstützt werden soll; und/oder
Numerologieinformationen über jeden BWP, der vom UE unterstützt werden soll; und/oder
erste Anzeigeinformationen, die anzeigen, ob das UE eine Cross-BWP-Planungsfähigkeit hat; und/oder
zweite Anzeigeinformation, die anzeigen, ob das UE eine schnelle Umschaltfähigkeit hat; und/oder
Informationen über eine Neuabstimmungszeitdauer, wenn das UE die schnelle Umschaltfähigkeit hat; und/oder
BWP-Messlücken-Fähigkeitsinformationen über das UE; und/oder
dritte Anzeigeinformationen, die anzeigen, ob das UE die Fähigkeit hat, bei einem aktuellen BWP verschiedene Messelemente des aktuellen BWP zu messen;
vierte Anzeigeinformationen, die anzeigen, ob das UE die Fähigkeit hat, an einem BWP verschiedene Messelemente des anderen BWP zu messen; und/oder
fünfte Anzeigeinformationen, die anzeigen, ob eine Messlücke für das UE konfiguriert werden muss, wenn das UE die Fähigkeit hat, an einem BWP verschiedene Messelemente des anderen BWP zu messen; und/oder
sechste Anzeigeinformationen, die anzeigen, ob eine Messlücke für das UE konfiguriert werden muss, wenn das UE eine SRS übertragen muss; und/oder
siebte Anzeigeinformationen, die anzeigen, ob eine Messlücke für das UE konfiguriert werden muss, wenn das UE eine Intra-Frequenz-Mehrstrahlmessung an einem BWP durchführt.

6. Verfahren zur Konfiguration des BWP nach Anspruch 4, wobei,
der Luftschnittstellenparametersatz einen Luftschnittstellenparametertyp aufweist,
der Luftschnittstellenparametertyp folgenden Parameter aufweist: einen ersten Luftschnittstellenparameter, der anzeigt, dass lediglich ein BWP in einem aktuellen Träger konfiguriert oder aktiviert werden kann; und/oder einen zweiten Luftschnittstellenparameter, der anzeigt, dass mindestens zwei BWPs an aufeinanderfolgenden Positionen in dem aktuellen Träger konfiguriert oder aktiviert werden können; und/oder einen dritten Luftschnittstellenparameter, der anzeigt, dass mindestens zwei BWPs an nicht aufeinanderfolgenden Positionen in dem aktuellen Träger konfiguriert oder aktiviert werden können; und/oder einen vierten Luftschnittstellenparameter, der anzeigt, dass mindestens zwei BWPs an unterschiedlichen Positionen in dem aktuellen Träger konfiguriert oder aktiviert werden können; und/oder einen fünften Luftschnittstellenparameter, der anzeigt, dass mindestens ein BWP an einer vorbestimmten Position in dem anderen Träger konfiguriert oder aktiviert werden kann, und
der andere Träger ein anderer Träger als der aktuelle Träger ist.

7. Verfahren zur Konfiguration des BWP nach Anspruch 4, wobei das Empfangen von den Informationen über die Übereinstimmung zwischen den Uplink-und Downlink-BWPs in dem Luftschnittstellenparametersatz von dem mindestens einen BWP, der von dem Netzwerkgerät in Übereinstimmung mit den UE-Fähigkeitsinformationen konfiguriert wird, Folgendes aufweist:
Empfangen von den Informationen über die Übereinstimmung zwischen den Uplink- und Downlink-BWPs in dem Luftschnittstellenparametersatz von dem mindestens einen BWP, der von dem Netzwerkgerät in Übereinstimmung mit den UE-Fähigkeitsinformationen konfiguriert wurde, durch Übertragen einer Konfiguration von einem der Uplink- und Downlink-BWPs in eine Konfiguration des anderen der Uplink-und Downlink-BWPs; oder
Empfangen von den Informationen über die Übereinstimmung zwischen den Uplink- und Downlink-BWPs in dem Luftschnittstellenparametersatz des mindestens einen BWP, der von dem Netzwerkgerät gemäß den UE-Fähigkeitsinformationen konfiguriert wird, durch Bereitstellen der Uplink- und Downlink-BWPs mit einer gleichen Konfiguration; oder
Empfangen von den Informationen über die Übereinstimmung zwischen den Uplink- und Downlink-BWPs in dem Luftschnittstellenparametersatz von dem mindestens einen BWP, der von dem Netzwerkgerät in Übereinstimmung mit den UE-Fähigkeitsinformationen konfiguriert wird, durch Konfigurieren einer vorbestimmten Variablen.

8. Verfahren zur Konfiguration des BWP nach Anspruch 4, wobei das Verfahren zur Konfiguration des BWP nach dem Empfangen des Luftschnittstellenparametersatzes von dem mindestens einen BWP, der von dem Netzwerkgerät in Übereinstimmung mit den UE-Fähigkeitsinformationen konfiguriert wird, ferner Folgendes aufweist:
Empfangen von L1/L2/L3-Messkonfigurationsinformationen an einem designierten BWP des mindestens einen BWP von dem Netzwerkgerät; und
Durchführen einer Messung in Übereinstimmung mit den Messkonfigurationsinformationen, um Messberichtinformationen zu erfassen, und Melden der Messberichtsinformationen an das Netzwerkgerät, so dass das Netzwerkgerät den Luftschnittstellenparametersatz für das UE in Übereinstimmung mit den Messberichtsinformationen aktualisiert.

9. Verfahren zur Konfiguration des BWP nach Anspruch 4, wobei das Verfahren zur Konfiguration des BWP nach dem Empfangen des Luftschnittstellenparametersatzes von dem mindestens einen BWP, der von dem Netzwerkgerät gemäß den UE-Fähigkeitsinformationen konfiguriert wird, ferner Folgendes aufweist:
Empfangen von Informationen über hinzuzufügende oder zu modifizierende BWPs von dem Netzwerkgerät,
wobei die Informationen über die BWPs folgenden Informationen aufweisen: Indexinformationen über jeden hinzuzufügenden oder zu modifizierenden BWP, und/oder zentrale Frequenzpunktinformationen über jeden hinzuzufügenden oder zu modifizierenden BWP, und/oder Bandbreiteninformationen über jeden hinzuzufügenden oder zu modifizierenden BWP, und/oder Antennenkonfigurationsinformationen über jeden hinzuzufügenden oder zu modifizierenden BWP, und/oder Numerologieinformationen über jeden hinzuzufügenden oder zu modifizierenden BWP, und/oder Uplink/Downlink-BWP-Konfigurationsinformationen, die jedem hinzuzufügenden oder zu modifizierenden BWP entsprechen, und/oder Konfigurationsinformationen über einen RACH für das UE in Bezug auf jeden hinzuzufügenden oder zu modifizierenden BWP, und/oder Informationen über einen Leistungssteuerungsparameter des UE in Bezug auf jeden hinzuzufügenden oder zu modifizierenden BWP, und/oder Cross-BWP-Planungskonfigurationsinformationen und/oder Konfigurationsinformationen über einen physikalischen Kanal für das UE in Bezug auf jeden hinzuzufügenden oder zu modifizierenden BWP.

10. Verfahren zur Konfiguration des BWP nach Anspruch 4, wobei das Verfahren zur Konfiguration des BWP nach dem Empfangen des Luftschnittstellenparametersatzes von dem mindestens einen BWP, der von dem Netzwerkgerät in Übereinstimmung mit den UE-Fähigkeitsinformationen konfiguriert wird, ferner Folgendes aufweist:
Empfangen von Informationen über eine Liste von zu löschenden BWPs von dem Netzwerkgerät.

11. UE (700) mit
einem Meldemodul (710), das so konfiguriert ist, dass es UE-Fähigkeitsinformationen, die BWP-Fähigkeitsinformationen enthalten, an ein Netzwerkgerät meldet; und
einem vierten Empfangsmodul (720), das so konfiguriert ist, dass es einen Luftschnittstellenparametersatz von mindestens einem BWP empfängt, der von dem Netzwerkgerät in Übereinstimmung mit den UE-Fähigkeitsinformationen konfiguriert wird,
wobei der Luftschnittstellenparametersatz mindestens einen Luftschnittstellenparameter des BWP aufweist;
**dadurch gekennzeichnet, dass** das vierte Empfangsmodul (720) ein zweites Empfangsuntermodul aufweist, das so konfiguriert ist, dass es mindestens einen BWP und den Luftschnittstellenparametersatz von dem mindestens einen BWP, der von dem Netzwerkgerät in Übereinstimmung mit den UE-Fähigkeitsinformationen konfiguriert wird, durch eine Broadcast-Nachricht oder eine voreingestellte Signalisierung empfängt;
wobei das zweite Empfangsuntermodul eine erste Empfangseinheit aufweist, die so konfiguriert ist, dass sie Informationen über eine Entsprechung zwischen Uplink-und Downlink-BWPs in dem Luftschnittstellenparametersatz von dem mindestens einen BWP empfängt, der von dem Netzwerkgerät in Übereinstimmung mit den UE-Fähigkeitsinformationen konfiguriert wird,
wobei die Uplink- und Downlink-BWPs ein BWP-Paar aufweisen, das aus einem Uplink-BWP und einem Downlink-BWP besteht, und die Informationen über die Übereinstimmung zwischen den Uplink- und Downlink-BWPs Informationen über eine Rückkopplungsbeziehung zwischen den Uplink- und Downlink-BWPs, und/oder Zeitplanungsinformationen über die Uplink- und Downlink-BWPs, und/oder Informationen über TA der Uplink- und Downlink-BWPs und/oder Pfadverlustinformationen über die Uplink- und Downlink-BWPs aufweisen.

12. UE (700) nach Anspruch 11, wobei die UE-Fähigkeitsinformationen Folgendes aufweisen:
Fähigkeitsinformationen über die maximale Anzahl von BWPs, die für das UE gleichzeitig für die Uplink- oder Downlink-Übertragung konfiguriert werden können, und eine Bandbreite; und/oder
Fähigkeitsinformationen über die maximale Anzahl von BWPs, die von dem UE gleichzeitig für die Uplink- oder Downlink-Übertragung aktiviert werden können und eine Bandbreite; und/oder
Fähigkeitsinformationen über die Anzahl der aufeinanderfolgenden oder nicht aufeinanderfolgenden BWPs auf einen gleichen Träger, die für das UE gleichzeitig konfiguriert werden können, und eine Bandbreite; und/oder
Fähigkeitsinformationen über die Anzahl der aufeinanderfolgenden oder nicht aufeinanderfolgenden BWPs auf einen gleichen Träger, die vom UE gleichzeitig aktiviert werden können, und eine Bandbreite; und/oder
Fähigkeitsinformationen über die Anzahl der BWPs, die für das UE gleichzeitig in verschiedenen Trägern konfiguriert werden können, und eine Bandbreite im Fall von CA; und/oder
Fähigkeitsinformationen über die Anzahl der BWPs, die für das UE gleichzeitig in verschiedenen Trägern konfiguriert werden können, und eine Bandbreite im Fall von DC; und/oder
Fähigkeitsinformationen über die Anzahl der BWPs, die von dem UE gleichzeitig auf verschiedenen Trägern aktiviert werden können, und eine Bandbreite im Fall von CA; und/oder
Fähigkeitsinformationen über die Anzahl der BWPs, die vom UE gleichzeitig auf verschiedenen Trägern aktiviert werden können, und eine Bandbreite im Fall von DC; und/oder
MIMO-Fähigkeitsinformationen über jeden BWP, der vom UE unterstützt werden soll; und/oder
Numerologieinformationen über jeden BWP, der vom UE unterstützt werden soll; und/oder
erste Anzeigeinformationen, die anzeigen, ob das UE eine Cross-BWP-Planungsfähigkeit hat; und/oder
zweite Anzeigeinformationen, die anzeigen, ob das UE eine schnelle Umschaltfähigkeit hat; und/oder
Informationen über eine Neuabstimmungszeitlänge, wenn das UE die Schnellumschaltfähigkeit hat; und/oder
BWP-Messlücken-Fähigkeitsinformationen über das UE; und/oder dritte Anzeigeinformationen, die anzeigen, ob das UE die Fähigkeit hat, bei einem aktuellen BWP verschiedene Messpunkte des aktuellen BWP zu messen; und/oder
vierte Anzeigeinformationen, die anzeigen, ob das UE die Fähigkeit hat, an einem BWP verschiedene Messelemente des anderen BWP zu messen; und/oder
fünfte Anzeigeinformationen, die anzeigen, ob eine Messlücke für das UE konfiguriert werden muss, wenn das UE die Fähigkeit hat, an einem BWP verschiedene Messelemente des anderen BWP zu messen; und/oder
sechste Anzeigeinformationen, die anzeigen, ob eine Messlücke für das UE konfiguriert werden muss, wenn das UE eine SRS übertragen muss; und/oder
siebte Anzeigeinformationen, die anzeigen, ob eine Messlücke für das UE konfiguriert werden muss, wenn das UE eine Intra-Frequenz-Mehrstrahlmessung an einem BWP durchführt.

13. UE (700) nach Anspruch 11, wobei,
der Luftschnittstellenparametersatz einen Luftschnittstellenparametertyp aufweist,
der Luftschnittstellenparametertyp Folgendes aufweist: einen ersten Luftschnittstellenparameter, der anzeigt, dass lediglich ein BWP in einem aktuellen Träger konfiguriert oder aktiviert werden kann; und/oder einen zweiten Luftschnittstellenparameter, der anzeigt, dass mindestens zwei BWPs an aufeinanderfolgenden Positionen in dem aktuellen Träger konfiguriert oder aktiviert werden können; und/oder einen dritten Luftschnittstellenparameter, der anzeigt, dass mindestens zwei BWPs an nicht aufeinanderfolgenden Positionen in dem aktuellen Träger konfiguriert oder aktiviert werden können und/oder einen vierten Luftschnittstellenparameter, der anzeigt, dass mindestens zwei BWP an unterschiedlichen Positionen in dem aktuellen Träger konfiguriert oder aktiviert werden können; und/oder einen fünften Luftschnittstellenparameter, der anzeigt, dass mindestens ein BWP an einer vorbestimmten Position in dem anderen Träger konfiguriert oder aktiviert werden kann, und
der andere Träger ein anderer Träger als der aktuelle Träger ist.

14. UE (700) nach Anspruch 11, wobei die erste Empfangseinheit Folgendes aufweist:
eine erste Empfangsuntereinheit, die so konfiguriert ist, dass sie die Informationen über die Übereinstimmung zwischen den Uplink- und Downlink-BWPs in dem Luftschnittstellenparametersatz von dem mindestens einen BWP empfängt, der von derm Netzwerkgerät in Übereinstimmung mit den UE-Fähigkeitsinformationen konfiguriert wird, indem eine Konfiguration eines der Uplink- und Downlink-BWPs in einer Konfiguration des anderen der Uplink- und Downlink-BWPs übertragen wird; oder
eine zweite Empfangsuntereinheit, die so konfiguriert ist, dass sie die Informationen über die Übereinstimmung zwischen den Uplink- und Downlink-BWPs in dem Luftschnittstellenparametersatz von dem mindestens einen BWP, der von dem Netzwerkgerät gemäß den UE-Fähigkeitsinformationen konfiguriert wird, durch Bereitstellen der Uplink- und Downlink-BWPs mit einer gleichen Konfiguration empfängt; oder
eine dritte Empfangsuntereinheit, die so konfiguriert ist, dass sie die Informationen über die Übereinstimmung zwischen den Uplink- und Downlink-BWPs in dem Luftschnittstellenparametersatz von dem mindestens einen BWP, der von dem Netzwerkgerät gemäß den UE-Fähigkeitsinformationen konfiguriert wird, durch Konfigurieren einer vorbestimmten Variablen empfängt.

15. Computerlesbares Speichermedium, in dem ein Programm gespeichert ist, **dadurch gekennzeichnet, dass** das Programm von einem Prozessor ausgeführt wird, um das Verfahren zur Konfiguration des BWP nach einem der Ansprüche 1 bis 2 oder das Verfahren zur Konfiguration des BWP nach einem der Ansprüche 4 bis 10 zu implementieren.

## Revendications

1. Procédé de configuration de partie de bande passante, BWP, appliqué pour un dispositif de réseau, comprenant :
la réception (11) d'informations de capacité d'équipement utilisateur, UE, portant des informations de capacité de BWP rapportées par un UE ; et
la configuration (12) d'un ensemble de paramètres d'interface radio d'au moins une BWP pour l'UE conformément aux informations de capacité d'UE, l'ensemble de paramètres d'interface radio comprenant au moins un paramètre d'interface radio de la BWP;
**caractérisé en ce que** la configuration (12) de l'ensemble de paramètres d'interface radio de la au moins une BWP pour l'UE conformément aux informations de capacité d'UE comprend :
la configuration d'au moins une BWP et de l'interface de paramètres d'interface radio de la au moins une BWP pour l'UE conformément aux informations de capacité d'UE ; et
la transmission de l'ensemble de paramètres d'interface radio de la au moins une BWP à l'UE par le biais d'un message de diffusion ou d'une signalisation prédéfinie ;
dans lequel la transmission de l'ensemble de paramètres d'interface radio de la au moins une BWP à l'UE par le biais du message de diffusion ou de la signalisation prédéfinie comprend :
la transmission d'informations concernant une correspondance entre des BWP de liaison montante et de liaison descendante dans l'ensemble de paramètres d'interface radio de la au moins une BWP à l'UE par le biais du message de diffusion ou de la signalisation prédéfinie,
dans lequel les BWP de liaison montante et de liaison descendante comprennent une paire de BWP consistant en une BWP de liaison montante et en une BWP de liaison descendante, et les informations concernant la correspondance entre les BWP de liaison montante et de liaison descendante comprennent au moins une parmi des informations concernant une relation de rétroaction entre les BWP de liaison montante et de liaison descendante, des informations de planification concernant les BWP de liaison montante et de liaison descendante, des informations concernant une avance temporelle, TA, des BWP de liaison montante et de liaison descendante, ou des informations de perte de voie concernant les BWP de liaison montante et de liaison descendante.

2. Procédé de configuration de BWP selon la revendication 1, dans lequel la transmission des informations concernant la correspondance entre les BWP de liaison montante et de liaison descendante dans l'ensemble de paramètres d'interface radio de la au moins une BWP à l'UE comprend :
la transmission des informations concernant la correspondance entre les BWP de liaison montante et de liaison descendante dans l'ensemble de paramètres d'interface radio de la au moins une BWP à l'UE par le biais du transport d'une configuration de l'une des BWP de liaison montante et de liaison descendante dans une configuration de l'autre des BWP de liaison montante ; ou
la transmission des informations concernant la correspondance entre les BWP de liaison montante et de liaison descendante dans l'ensemble de paramètres d'interface radio de la moins une BWP à l'UE par le biais de la fourniture des BWP de liaison montante et de liaison descendante présentant une même configuration ; ou
la transmission des informations concernant la correspondance entre les BWP de liaison montante et de liaison descendante dans l'ensemble de paramètres d'interface radio de la au moins une BWP à l'UE par le biais d'une configuration d'une variable prédéterminée.

3. Dispositif de réseau (400), comprenant :
un premier module de réception (410) configuré pour recevoir des informations de capacité d'UE portant des informations de capacité de BWP rapportées par un UE ; et
un module de configuration (420) configuré pour configurer un ensemble de paramètres d'interface radio d'au moins une BWP pour l'UE conformément aux informations de capacité d'UE, l'ensemble de paramètres d'interface radio comprenant au moins un paramètre d'interface radio de la BWP ;
**caractérisé en ce que** le module de configuration (420) comprend :
un sous-module de configuration configuré pour configurer au moins une BWP et l'ensemble de paramètres d'interface radio de l'au moins une BWP pour l'UE conformément aux informations de capacité d'UE ; et
un premier sous-module de transmission configuré pour transmettre l'ensemble de paramètres d'interface radio de la au moins une BWP à l'UE par le biais d'un message de diffusion ou d'une signalisation prédéfinie ;
dans lequel le premier sous-module de transmission comprend une première unité de transmission configurée pour transmettre des informations concernant une correspondance entre des BWP de liaison montante et de liaison descendante dans l'ensemble de paramètres d'interface radio de la au moins une BWP à l'UE par le biais du message de diffusion ou de la signalisation prédéfinie,
dans lequel les BWP de liaison montante et de liaison descendante comprennent une paire de BWP consistant en une BWP de liaison montante et en une BWP de liaison descendante, et les informations concernant la correspondance entre les BWP de liaison montante et de liaison descendante comprennent au moins une parmi des informations concernant une relation de rétroaction entre les BWP de liaison montante et de liaison descendante, des informations de planification concernant les BWP de liaison montante et de liaison descendante, des informations concernant une TA des BWP de liaison montante et de liaison descendante, ou des informations de perte de voie concernant les BWP de liaison montante et de liaison descendante.

4. Procédé de configuration de BWP appliqué pour un UE, comprenant :
le rapport (61) d'informations de capacité d'UE portant des informations de capacité de BWP à un dispositif de réseau ; et
la réception (62) d'un ensemble de paramètres d'interface radio d'au moins une BWP configurée par le dispositif de réseau conformément aux informations de capacité d'UE,
dans lequel l'ensemble de paramètres d'interface radio comprend au moins un paramètre d'interface radio de la BWP ;
**caractérisé en ce que** la réception (62) de l'ensemble de paramètres d'interface radio de la au moins une BWP configurée par le dispositif de réseau conformément aux informations de capacité d'UE comprend : la réception d'au moins une BWP et de l'ensemble de paramètres d'interface radio de la au moins une BWP configurée par le dispositif de réseau conformément aux informations de capacité d'UE par le biais d'un message de diffusion ou d'une signalisation prédéfinie ;
dans lequel la réception de la au moins une BWP et l'ensemble de paramètres d'interface radio de la au moins une BWP configurée par le dispositif de réseau conformément aux informations de capacité d'UE comprend :
la réception d'informations concernant une correspondance entre des BWP de liaison montante et de liaison descendante dans l'ensemble de paramètres d'interface radio de la au moins une BWP configurée par le dispositif de réseau conformément aux informations de capacité d'UE,
dans lequel les BWP de liaison montante et de liaison descendante comprennent une paire de BWP consistant en une BWP de liaison montante et en une BWP de liaison descendante, et les informations concernant la correspondance entre les BWP de liaison montante et de liaison descendante comprennent au moins une parmi des informations concernant une relation de rétroaction entre les BWP de liaison montante et de liaison descendante, des informations de planification concernant les BWP de liaison montante et de liaison descendante, des informations concernant une TA des BWP de liaison montante et de liaison descendante, ou des informations de perte de voie concernant les BWP de liaison montante et de liaison descendante.

5. Procédé de configuration de BWP selon la revendication 4, dans lequel les informations de capacité d'UE comprennent au moins une parmi :
des informations de capacité concernant la quantité maximale de BWP capables d'être configurées pour l'UE simultanément pour transmission de liaison montante ou de liaison descendante et une bande passante ;
des informations de capacité concernant la quantité maximale de BWP capables d'être activées par l'UE simultanément pour la transmission de liaison montante ou de liaison descendante et une bande passante ;
des informations de capacité concernant la quantité de BWP consécutives ou non consécutives dans une même porteuse capables d'être configurées pour l'UE simultanément et une bande passante ;
des informations de capacité concernant la quantité de BWP consécutives ou non consécutives dans une même porteuse capables d'être activées par l'UE simultanément et une bande passante ;
des informations de capacité concernant la quantité de BWP capables d'être configurées pour l'UE simultanément dans différentes porteuses et une bande passante en cas de CA ;
des informations de capacité concernant la quantité de BWP capables d'être configurées pour l'UE simultanément dans différentes porteuses et une bande passante en cas de DC ;
des informations de capacité concernant la quantité de BWP capables d'être activées par l'UE simultanément dans différentes porteuses et une bande passante en cas de CA;
des informations de capacité concernant la quantité de BWP capables d'être activées par l'UE simultanément dans différentes porteuses et une bande passante en cas de DC;
des informations de capacité MIMO concernant chaque BWP à supporter par l'UE ; des informations de numérologie concernant chaque BWP à supporter par l'UE ;
des premières informations d'indication indiquant si l"UE présente une capacité de planification de BWP croisées ;
des deuxièmes informations d'indication indiquant si l"UE présente une capacité de commutation rapide ;
des informations concernant une longueur de temps de resyntonisation lorsque l'UE présente la capacité de commutation rapide ;
des informations de capacité d'intervalle de mesure de BWP concernant l'UE ;
des troisièmes informations d'indication indiquant si l'UE présente une capacité de mesure, au niveau d'une BWP actuelle, de différents éléments de mesure de la BWP actuelle ;
des quatrièmes informations d'indication indiquant si l'UE présente une capacité de mesure, au niveau d'une BWP, de différents éléments de mesure de l'autre BWP ;
des cinquièmes informations d'indication indiquant si un intervalle de mesure a besoin d'être configuré pour l'UE lorsque l'UE présente la capacité de mesure, au niveau d'une BWP, de différentes éléments de mesure de l'autre BWP ;
des sixièmes informations d'indication indiquant si un intervalle de mesure a besoin d'être configuré pour l'UE lorsque l'UE a besoin de transmettre un SRS ; et
des septièmes informations d'indication indiquant si un intervalle de mesure a besoin d'être configuré pour l'UE lorsque l'UE effectue une mesure à faisceaux multiples intrafréquence sur une BWP.

6. Procédé de configuration de BWP selon la revendication 4, dans lequel,
l'ensemble de paramètres d'interface radio comprend un type de paramètre d'interface radio,
le type de paramètre d'interface radio comprend au moins un parmi : un premier paramètre d'interface radio indiquant qu'une seule BWP est capable d'être configurée ou activée dans une porteuse actuelle ; un deuxième paramètre d'interface radio indiquant qu'au moins deux BWP à des positions consécutives sont capables d'être configurées ou activées dans la porteuse actuelle ; un troisième paramètre d'interface radio indiquant qu'au moins deux BWP à des positions non consécutives sont capables d'être configurées ou activées dans la porteuse actuelle ; un quatrième paramètre d'interface radio indiquant qu'au moins deux BWP à des positions différentes sont capables d'être configurées ou activées dans la porteuse actuelle ; ou une cinquième paramètre d'interface radio indiquant qu'au moins une BWP à une position prédéterminée est capable d'être configurée ou activée dans l'autre porteuse, et
l'autre porteuse est une porteuse autre la porteuse actuelle.

7. Procédé de configuration de BWP selon la revendication 4, dans lequel la réception des informations concernant la correspondance entre les BWP de liaison montante et de liaison descendante dans l'ensemble de paramètres d'interface radio de la au moins une BWP configurée par le dispositif de réseau conformément aux informations de capacité d'UE comprend :
la réception des informations concernant la correspondance entre les BWP de liaison montante et de liaison descendante dans l'ensemble de paramètres d'interface radio de la au moins une BWP configurée par le dispositif de réseau conformément aux informations de capacité d'UE par le biais du transport d'une configuration d'une des BWP de liaison montante et de liaison descendante dans une configuration de l'autre des BWP de liaison montante et de liaison descendante ; ou
la réception des informations concernant la correspondance entre les BWP de liaison montante et de liaison descendante dans l'ensemble de paramètres d'interface radio de la au moins une BWP configurée par le dispositif de réseau conformément aux informations de capacité d'UE par le biais de la fourniture des BWP de liaison montante et de liaison descendante présentant une même configuration ; ou
la réception des informations concernant la correspondance entre les BWP de liaison montante et de liaison descendante dans l'ensemble de paramètres d'interface radio de la au moins une BWP configurée par le dispositif de réseau conformément aux informations de capacité d'UE par le biais d'une configuration d'une variable prédéterminée.

8. Procédé de configuration de BWP selon la revendication 4, dans lequel à la suite de la réception de l'ensemble de paramètres d'interface radio de la au moins une BWP configurée par le dispositif de réseau conformément aux informations de capacité d'UE, le procédé de configuration de BWP comprend en outre :
la réception d'informations de configuration de mesure de L1/L2/L3 au niveau d'une BWP désignée de la au moins une BWP en provenance du dispositif de réseau ; et
la réalisation d'une mesure conformément aux informations de configuration de mesure pour acquérir des informations de rapport de mesure et le rapport des informations de rapport de mesure au dispositif de réseau, de telle sorte que le dispositif de réseau met à jour l'ensemble de paramètres d'interface radio pour l'UE conformément aux informations de rapport de mesure.

9. Procédé de configuration de BWP selon la revendication 4, dans lequel à la suite de la réception de l'ensemble de paramètres d'interface radio de la au moins une BWP configurée par le dispositif de réseau conformément aux informations de capacité d'UE, le procédé de configuration de BWP comprend en outre :
la réception d'informations concernant des BWP à ajouter ou à modifier en provenance du dispositif de réseau,
dans lequel les informations concernant les BWP comprennent au moins une parmi des informations d'indice concernant chaque BWP à ajouter ou à modifier, des informations de point de fréquence centrale concernant chaque BWP à ajouter ou à modifier, des informations de bande passante concernant chaque BWP à ajouter ou à modifier, des informations de configuration d'antenne concernant chaque BWP à ajouter ou à modifier, des informations de numérologie concernant chaque BWP à ajouter ou à modifier, des informations de configuration de BWP de liaison montante/liaison descendante correspondant à chaque BWP à ajouter ou à modifier, des informations de configuration concernant un RACH pour l'UE par rapport à chaque BWP à ajouter ou à modifier, des informations concernant un paramètre de commande de puissance de l'UE par rapport à chaque BWP à ajouter ou à modifier, des informations de configuration de planification de BWP croisées, ou des informations de configuration concernant un canal physique pour l'UE par rapport à chaque BWP à ajouter ou à modifier.

10. Procédé de configuration de BWP selon la revendication 4, dans lequel à la suite de la réception de l'ensemble de paramètres d'interface radio de la au moins une BWP configurée par le dispositif de réseau conformément aux informations de capacité d'UE, le procédé de configuration de BWP comprend en outre :
la réception d'informations concernant une liste de BWP à supprimer en provenance du dispositif de réseau.

11. UE (700), comprenant :
un module de rapport (710) configuré pour rapporter des informations de capacité d'UE portant des informations de capacité de BWP à un dispositif de réseau ; et
un quatrième module de réception (720) configuré pour recevoir un ensemble de paramètres d'interface radio d'au moins une BWP configurée par le dispositif de réseau conformément aux informations de capacité d'UE,
dans lequel l'ensemble de paramètres d'interface radio comprend au moins un paramètre d'interface radio de la BWP ;
**caractérisé en ce que** le quatrième module de réception (720) comprend un deuxième sous-module de réception configuré pour recevoir au moins une BWP et l'ensemble de paramètres d'interface radio de la au moins une BWP configurée par le dispositif de réseau conformément aux informations de capacité d'UE par le biais d'un message de diffusion ou d'une signalisation prédéfinie ;
dans lequel le deuxième sous-module de réception comprend une première unité de réception configurée pour recevoir des informations concernant une correspondance entre des BWP de liaison montante et de liaison descendante dans l'ensemble de paramètres d'interface radio de la au moins une BWP configuré par le dispositif de réseau conformément aux informations de capacité d'UE,
dans lequel les BWP de liaison montante et de liaison descendante comprennent une paire de BWP consistant en une BWP de liaison montante et en une BWP de liaison descendante, et les informations concernant la correspondance entre les BWP de liaison montante et de liaison descendante comprennent au moins une parmi des informations concernant une relation de rétroaction entre les BWP de liaison montante et de liaison descendante, des informations de planification concernant les BWP de liaison montante et de liaison descendante, des informations concernant une TA des BWP de liaison montante et de liaison descendante, ou des informations de perte de voie concernant les BWP de liaison montante et de liaison descendante.

12. UE (700) selon la revendication 11, dans lequel les informations de capacité d'UE comprennent au moins une parmi :
des informations de capacité concernant la quantité maximale de BWP capables d'être configurées pour l'UE simultanément pour transmission de liaison montante ou de liaison descendante et une bande passante ;
des informations de capacité concernant la quantité maximale de BWP capables d'être activées par l'UE simultanément pour la transmission de liaison montante ou de liaison descendante et une bande passante ;
des informations de capacité concernant la quantité de BWP consécutives ou non consécutives dans une même porteuse capables d'être configurées pour l'UE simultanément et une bande passante ;
des informations de capacité concernant la quantité de BWP consécutives ou non consécutives dans une même porteuse capables d'être activées par l'UE simultanément et une bande passante ;
des informations de capacité concernant la quantité de BWP capables d'être configurées pour l'UE simultanément dans différentes porteuses et une bande passante en cas de CA ;
des informations de capacité concernant la quantité de BWP capables d'être configurées pour l'UE simultanément dans différentes porteuses et une bande passante en cas de DC ;
des informations de capacité concernant la quantité de BWP capables d'être activées par l'UE simultanément dans différentes porteuses et une bande passante en cas de CA ;
des informations de capacité concernant la quantité de BWP capables d'être activées par l'UE simultanément dans différentes porteuses et une bande passante en cas de DC ;
des informations de capacité MIMO concernant chaque BWP à supporter par l'UE ;
des informations de numérologie concernant chaque BWP à supporter par l'UE ;
des premières informations d'indication indiquant si l"UE présente une capacité de planification de BWP croisées ;
des deuxièmes informations d'indication indiquant si l"UE présente une capacité de commutation rapide ;
des informations concernant une longueur de temps de resyntonisation lorsque l'UE présente la capacité de commutation rapide ;
des informations de capacité d'intervalle de mesure de BWP concernant l'UE ;
des troisièmes informations d'indication indiquant si l'UE présente une capacité de mesure, au niveau d'une BWP actuelle, de différents éléments de mesure de la BWP actuelle ;
des quatrièmes informations d'indication indiquant si l'UE présente une capacité de mesure, au niveau d'une BWP, de différents éléments de mesure de l'autre BWP ;
des cinquièmes informations d'indication indiquant si un intervalle de mesure a besoin d'être configuré pour l'UE lorsque l'UE présente la capacité de mesure, au niveau d'une BWP, de différentes éléments de mesure de l'autre BWP ;
des sixièmes informations d'indication indiquant si un intervalle de mesure a besoin d'être configuré pour l'UE lorsque l'UE a besoin de transmettre un SRS ; et
des septièmes informations d'indication indiquant si un intervalle de mesure a besoin d'être configuré pour l'UE lorsque l'UE effectue une mesure à faisceaux multiples intrafréquence sur une BWP.

13. UE (700) selon la revendication 11, dans lequel,
l'ensemble de paramètres d'interface radio comprend un type de paramètre d'interface radio,
le type de paramètre d'interface radio comprend au moins un parmi un premier paramètre d'interface radio indiquant qu'une seule BWP est capable d'être configurée ou activée dans une porteuse actuelle ; un deuxième paramètre d'interface radio indiquant qu'au moins deux BWP à des positions consécutives sont capables d'être configurées ou activées dans la porteuse actuelle ; un troisième paramètre d'interface radio indiquant qu'au moins deux BWP à des positions non consécutives sont capables d'être configurées ou activées dans la porteuse actuelle ; un quatrième paramètre d'interface radio indiquant qu'au moins deux BWP à des positions différentes sont capables d'être configurées ou activées dans la porteuse actuelle ; ou une cinquième paramètre d'interface radio indiquant qu'au moins une BWP à une position prédéterminée est capable d'être configurée ou activée dans l'autre porteuse, et
l'autre porteuse est une porteuse autre la porteuse actuelle.

14. UE (700) selon la revendication 11, dans lequel la première unité de réception comprend :
une première sous-unité de réception configurée pour recevoir les informations concernant la correspondance entre les BWP de liaison montante et de liaison descendante dans l'ensemble de paramètres d'interface radio de la au moins une BWP configuré par le dispositif de réseau conformément aux informations de capacité d'UE par le biais du transport d'une configuration d'une des BWP de liaison montante et de liaison descendante dans une configuration de l'autre des BWP de liaison montante et de liaison descendante ; ou
une deuxième sous-unité de réception configurée pour recevoir les informations concernant la correspondance entre les BWP de liaison montante et de liaison descendante dans l'ensemble de paramètres d'interface radio de la au moins une BWP configurée par le dispositif de réseau conformément aux informations de capacité d'UE par le biais de la fourniture des BWP de liaison montante et de liaison descendante présentant une même configuration ; ou
une troisième sous-unité de réception configurée pour recevoir les informations concernant la correspondance entre les BWP de liaison montante et de liaison descendante dans l'ensemble de paramètres d'interface radio de la au moins une BWP configurée par le dispositif de réseau conformément aux informations de capacité d'UE par le biais d'une configuration d'une variable prédéterminée.

15. Support de stockage lisible par ordinateur stockant dans celui-ci un programme, **caractérisé en ce que** le programme est exécuté par un processeur de manière à mettre en oeuvre le procédé de configuration de BWP selon l'une quelconque des revendications 1 à 2, ou mettre en oeuvre le procédé de configuration de BWP selon l'une quelconque des revendications 4 à 10.
